# EUROPÄISCHE PATENTSCHRIFT

(11) **EP 2 255 401 B1**
(45) Veröffentlichungstag und Bekanntmachung des Hinweises auf die Patenterteilung: **01.04.2015**
(21) Anmeldenummer: 09711807.9
(22) Anmeldetag: 19.02.2009
(51) Int. Cl.: H01M 2/16

(54) **VLIESSTOFF MIT VERNETZUNGSMATERIAL**
NONWOVEN FABRIC HAVING CROSS-LINKING MATERIAL
NON-TISSÉ COMPORTANT UN MATÉRIAU DE RÉTICULATION

(30) Priorität: 20.02.2008 DE 102008010152
(43) Veröffentlichungstag der Anmeldung: 01.12.2010
(73) Patentinhaber: Carl Freudenberg KG, 69469 Weinheim (DE)
(72) Erfinder: WEBER, Christoph, 69514 Laudenbach (DE); ROTH, Michael Dr., 55131 Mainz (DE); SMITH, Iain, Shrivenham Swindon SN6 8BA (GB); GENTILCORE, Giovanni, Swindon SN1 3PY (GB)
(74) Vertreter: Ripper, Monika Sigrid
(86) Internationale Anmeldenummer: PCT/EP2009/001197
(87) Internationale Veröffentlichungsnummer: WO 2009/103537

(56) Entgegenhaltungen:
- EP-A- 1 271 673
- WO-A1-2007/126242
- DE-A1- 19 850 826
- GB-A- 2 078 769

## Beschreibung

### Technisches Gebiet

Die Erfindung betrifft eine Lage mit einem Grundkörper, wobei der Grundkörper Poren aufweist, wobei die Lage einen Binder aufweist, wobei der Binder vernetzt ist. Gegenstand der Erfindung sind auch Verfahren zur Herstellung der Lage, deren Verwendung und Vorrichtungen, die die Lage enthalten.

### Stand der Technik

Lagen der genannten Art sind aus dem Stand der Technik bereits bekannt. Solche Lagen werden als Separatoren in Batterien und Kondensatoren eingesetzt, die der Energiespeicherung dienen. Die Ladungsspeicherung in Batterien und Kondensatoren findet chemisch, physikalisch oder in einer Mischform, z. B. durch Chemisorption, statt.

Um eine interne Entladung innerhalb der Batterie oder des Kondensators zu vermeiden, werden entgegengesetzt geladene Elektroden mechanisch durch nicht elektronenleitende Materialien, so genannte Separatoren oder Spacer, voneinander getrennt. Zugleich ermöglichen die Separatoren oder Spacer auf Grund ihrer dem Energiespeichersystem und dessen Anwendung angepassten Porosität den Transport ionischer Ladungsträger eines Elektrolyten zwischen den Elektroden.

Die aus dem Stand der Technik bekannten Separatoren zeigen kleine, miteinander vernetzte Öffnungen im Mikrometerbereich. Diese Öffnungen sollen möglichst groß sein, damit die Elektrolytleitfähigkeit im getränkten Separator möglichst hoch ist und die Batterie somit eine hohe Leistungsdichte aufweist. Sind die Öffnungen jedoch zu groß, dann können Metalldendriten zu einem Kurzschluss zwischen den beiden eigentlich elektrisch voneinander zu trennenden Elektroden führen. Die Metalldendriten bestehen entweder aus Lithium oder aus anderen Metallen, die als Verunreinigungen in der Batterie vorliegen können.

Des Weiteren können Partikel aus elektrisch leitfähigen Elektrodenmaterialien durch die Öffnungen wandern. Auf Grund dieser Vorgänge kann ein Kurzschluss zwischen den Elektroden entstehen und die Selbstentladung der Batterie oder des Kondensators stark beschleunigt werden.

Bei einem Kurzschluss können lokal sehr hohe Ströme fließen, wodurch Wärme freigesetzt wird. Diese Wärme kann zum Schmelzen des Separators führen, wodurch wiederum die isolierende Wirkung des Separators deutlich nachlassen kann. Eine sich sehr schnell selbst entladende Batterie birgt dadurch auf Grund ihres hohen Energieinhaltes sowie der Brennbarkeit des Elektrolyten und anderer Bestandteile ein hohes Sicherheitsrisiko.

Ein weiterer Nachteil der aus dem Stand der Technik bekannten Separatoren ist deren mangelnde Beständigkeit bei steigenden Temperaturen. Der Schmelzpunkt bei Verwendung von Polyethylen liegt bei rund 130°C bzw. rund 150°C bei Verwendung von Polypropylen.

Als Ursachen für Kurzschlüsse können Schrumpf des Separators durch zu hohe Temperatur in der Batterie, Metalldendritenwachstum durch Reduktion von Metallionen (Lithium, Eisen, Mangan oder sonstige metallische Verunreinigungen), Abrieb von Elektrodenpartikeln, Schneidabrieb bzw. gebrochener Elektrodenbelag und unmittelbarer Kontakt der beiden flachen Elektroden unter Druck genannt werden.

In der EP 0 892 448 A2 ist der sogenannte "Shut down"-Mechanismus offenbart. Dieser wirkt bei lokaler Erwärmung durch beispielsweise einen Kurzschluss dessen flächiger Ausbreitung entgegen, indem die Ionenleitung in der Nähe des anfänglichen Kurzschlusses unterdrückt wird. Durch die Verlustwärme des Kurzschlusses wird Polyethylen so weit erhitzt, dass es schmilzt und die Poren des Separators verschließt. Höher schmelzendes Polypropylen bleibt mechanisch intakt.

Die US 2002/0168569 A1 beschreibt den Aufbau eines Separators bestehend aus Polyvinyldifluorid, welches im Herstellungsprozess mit einem Lösemittel angelöst, mit Siliziumdioxid-Partikeln vermengt und als dünner Film ausgebracht wird. Beim Entfernen des Lösemittels bleibt eine poröse Membran zurück.

Die WO 2006/068428 A1 beschreibt die Herstellung von Separatoren für Lithium-Ionen-Batterien unter Verwendung eines Polyolefin-Separators der zusätzlich mit gelartigen Polymeren und anorganischen Partikeln gefüllt wird.

Die WO 2004/021475 A1 beschreibt den Einsatz von keramischen Partikeln, die über silizium-organische Haftvermittler und anorganische Bindemittel aus Oxiden der Elemente Silizium, Aluminium und/oder Zirkon zu einer dünnen Flächenware ausgeformt werden.

Um eine ausreichende mechanische Flexibilität einzustellen, werden die Keramikpartikel in ein Stützmaterial, beispielsweise einen Vliesstoff eingebracht. Dies offenbart die WO 2005/038959 A1.

Um Kurzschlüsse im Anfangsstadium der Metalldendritenbildung zu unterbinden, wird in der WO 2005/104269 A1 der Einsatz von niederschmelzenden Wachsen als Beimengung zu einer Keramikpaste beschrieben.

In der WO 2007/028662 A1 wird der Zusatz von Polymerpartikeln mit einem Schmelzpunkt von über 100° C zu keramischen Füllstoffen beschrieben, um die mechanischen Eigenschaften des Separators zu verbessern. Die beschriebenen Materialien sollen als Separator für Lithium-Ionen Materialien dienen. Obwohl mit diesen Separatoren eine höhere Temperaturbeständigkeit im Vergleich zu Membranen erzielt werden kann, können sie sich noch nicht kommerziell durchsetzen. Dies kann einerseits an den relativ hohen Kosten und andererseits an der zu hohen Materialdicke liegen, welche über 25 µm liegt.

Die WO 2000/024075 A1 beschreibt die Herstellung einer Membran, die in Brennstoffzellen eingesetzt werden kann. Diese besteht aus Glasfasermaterialien, in welchen mittels eines Silikatbinders Fluorkohlenwasserstoffpolymere fixiert werden.

Schließlich beschreibt die JP 2005268096 A einen Separator für Li-Ionen Batterien, der durch das Zusammenschmelzen von thermoplastischen Partikeln in einem Polyethylen/Polypropylen Faserstützmaterial durch Erhitzung dargestellt wird. Dieser besitzt eine blasenförmige Porenstruktur mit einem Porendurchmesser von 0.1 - 15 µm.

Das Europäische Patent EP 1 138 092 B1 betrifft Verbundköper für elektrochemische Zellen. Diese bestehen aus zwei Schichten, wobei eine Schicht aus Partikeln und Binder auf eine zweite Schicht aufgebracht wird. Die zweite Schicht kann eine Folie oder ein Vlies sein.

Die US 2006/0078722 A1 offenbart poröse Filme aus einem vernetzten Polyolefinharz.

Die EP 1 271 673 A1 betrifft gasdurchlässige Separatoren für Batterien. Dabei wird eine vernetzte Polymerschicht auf eine poröse Unterlage aufgebracht.

Der Stand der Technik zeigt jedoch keinen kostengünstigen Separator, der bei geringer Dicke eine hohe Porosität und eine hohe Temperaturstabilität zeigt und in Batterien mit hoher Leistungs- und Energiedichte über einen weiten Temperaturbereich bei hohen Sicherheitsanforderungen einsetzbar ist. Ein besonderes Problem bekannter Materialien ist es, das diese bei erhöhter Temperatur schrumpfen, wodurch die Porosität sinkt und die Eigenschaften negativ beeinflusst werden. Außerdem fehlt es an Verfahren, effiziente Separatoren auf einfache Weise in wenigen Arbeitsschritten herzustellen.

Der Erfindung liegt daher die Aufgabe zugrunde, eine Lage bereitzustellen, die die beschriebenen Probleme überwindet.

Der Erfindung liegt insbesondere die Aufgabe zu Grunde, eine Lage derart auszugestalten und weiterzubilden, dass sie nach kostengünstiger Fertigung bei geringer Dicke eine hohe Porosität, gute Ionenleitfähigkeit und hohe Temperaturstabilität aufweist. Das Material soll insbesondere eine hohe Leistungsdichte aufweisen. Eine hohe Leistungsdichte bewirkt beim Einsatz in Batterien eine geringere Eigenerwärmung und einen höheren Wirkungsgrad. Das Material soll insbesondere bei erhöhter Temperatur seine Struktur beibehalten und nicht schrumpfen oder sich in sonstiger unerwünschter Weise verändern. Es soll auch ein Verfahren bereitgestellt werden, das die Herstellung solcher Lagen auf einfache Weise, gleichmäßig und schnell ermöglicht.

### Darstellung der Erfindung

Die vorliegende Erfindung löst die zuvor genannte Aufgabe durch die Merkmale der Patentansprüche 1 bis 11.

Ein Gegenstand der Erfindung ist eine Lage mit einem Grundkörper, wobei der Grundkörper Poren aufweist, wobei die Lage einen Binder aufweist, wobei der Binder vernetzt ist.

Dabei kann der Grundkörper zumindest teilweise mit Partikeln befüllt sein, wobei die Partikel die ersten Poren zumindest teilweise ausfüllen und mit Partikeln befüllte Bereiche ausbilden, wobei die Partikel in den befüllten Bereichen zweite Poren ausbilden.

Der Binder ist in den Poren enthalten. Wenn zusätzlich Partikel enthalten sind, ist der Binder in den zweiten Poren enthalten. Der Binder ist erfindungsgemäß ein Polymer, insbesondere ein organisches Polymer. Das Polymer ist vernetzt. Der Binder bildet somit in den ersten Poren bzw. den zweiten Poren ein Netzwerk. Dadurch wird die Lage insgesamt stabilisiert. Es kann gegebenenfalls die Einbettung der Partikel in den Grundkörper stabilisiert werden. Eine erfindungsgemäße Lage wird insbesondere erhalten, indem die Vernetzung in Gegenwart des Grundkörpers erfolgt. Sofern Partikel enthalten sind, kann der Binder die Partikel an den Vliesstoff binden. Des Weiteren bindet er die Fasern des Vliesstoffs aneinander. Die Binder sind erfindungsgemäß vernetzt (quervernetzt). Dies bedeutet, dass die Polymerketten des Binders untereinander zumindest zum Teil kovalent miteinander verknüpft sind. Auf diese Weise bilden die Bindermoleküle ein dreidimensionales Netwerk. Das Netzwerk ist mikroporös und erlaubt den Transfer und die Diffusion von Flüssigkeiten, sowie den in den Flüssigkeiten enthaltenen ionischen und nicht-ionischen Verbindungen. Das Polymernetzwerk stabilisiert vorzugsweise auch die eingebetteten Partikel.

Die Partikel können in den befüllten Bereichen zweite Poren ausbilden, wobei der mittlere Durchmesser der Partikel größer als die mittlere Porengröße der Mehrzahl der zweiten Poren ist.

Die Häufigkeitsverteilung der mittleren Porengrößen wird erfindungsgemäß bevorzugt derart eingestellt, dass mehr als 50 % der zweiten Poren mittlere Porengrößen zeigen, die unterhalb des mittleren Durchmessers der Partikel liegen. Die Porenstruktur eines kostengünstigen Grundkörpers, beispielsweise eines Vliesstoffs, kann durch die Vernetzung und die geeignete Anordnung und Auswahl von Bindern und gegebenenfalls Partikeln modifiziert werden.

Die Porosität der erfindungsgemäßen Lage kann im Vergleich zu Polyolefin-Membranen gesteigert werden, ohne deren Stabilität zu vermindern. Die Anordnung einer Vielzahl von Partikeln, deren mittlerer Durchmesser größer als die mittlere Porengröße der Mehrzahl der zweiten Poren im befüllten Bereich ist, erlaubt die Ausbildung einer hohen Porosität und damit eine begünstigte Elektrolyt-Aufnahme durch den Grundkörper. Zugleich wird eine Porenstruktur geschaffen, in der sich nahezu keine schädlichen Metalldendriten ausbilden können. Durch die Vernetzung und die Anordnung der Partikel kann eine Porenstruktur erzeugt werden, die nicht blasenartig, sondern labyrinthartig ist und gestreckte Poren aufweist. Bei einer solchen Porenstruktur können sich dendritenartige Durchwachsungen nahezu nicht von einer Seite der Lage zur anderen Seite durchgängig ausbilden. Insoweit werden Kurzschlüsse in Batterien oder Kondensatoren wirksam verhindert. Die erfindungsgemäße Lage eignet sich daher besonders als Separator für Batterien und Kondensatoren mit hoher Leistungs- und Energiedichte. Die erfindungsgemäße Lage ist über einen weiten Temperaturbereich bei hohen Sicherheitsanforderungen einsetzbar.

Die Partikel könnten kugelförmig sein. Hierdurch kann vorteilhaft eine überwiegend dichteste Kugelpackung in den ersten Poren des Grundkörpers, insbesondere des Vliesstoffs, erzeugt werden. Die mittlere Porengröße der Mehrzahl der zweiten Poren wird dann im Wesentlichen durch die geometrischen Verhältnisse in Kugelpackungen bestimmt. Es gibt unendlich viele Möglichkeiten, eine dichteste Kugelpackung herzustellen. Gemein ist ihnen, dass sie aus hexagonalen Kugel-Schichten bestehen. Die zwei wichtigsten Vertreter sind die hexagonal dichteste Kugelpackung (Schichtfolge A, B, A, B, A, B) und die kubisch dichteste Kugelpackung (Schichtfolge A, B, C, A, B, C, A). Die kubisch dichteste Kugelpackung wird auch kubisch flächenzentrierte Kugelpackung genannt. In einer dichtesten Kugelpackung hat jede Kugel 12 nächste Nachbarn, sechs in der eigenen Schicht, sowie drei je darüber und darunter. Sie bilden bei der kubischen Packung einen Kuboktaeder, bei der hexagonalen einen Antikuboktaeder. Der Raumfüllungsgrad einer dichtesten Kugelpackung beträgt 74%. Es wird jedoch angestrebt, eine möglichst hohe Porosität zu erzeugen. Daher werden nicht alle Partikel in den ersten Poren des Grundkörpers eine dichteste Kugelpackung ausbilden. Vielmehr werden auch Zonen loser Schüttung der Partikel auftreten, wodurch eine hohe Porosität begünstigt wird.

In einer weiteren Ausführungsform der Erfindung sind die Partikel nicht kugelförmig, oder es ist ein Anteil von nicht kugelförmigen Partikeln enthalten. Diese Ausführungsform betrifft insbesondere den Einsatz von anorganischen Partikeln. Diese weisen häufig eine unregelmäßige, zerklüftete Form mit Ecken und Kanten auf. Solchen Partikel können auch kugelförmigen Partikeln zugemischt werden, beispielsweise in einem Anteil von bis 10, 20 oder 50 Gew.-%. Auf diese Art können die Eigenschaften der Partikel in vorteilhafter Weise kombiniert werden.

Die Partikel könnten im Grundkörper flächig homogen verteilt sein. Durch diese konkrete Ausgestaltung können Kurzschlüsse besonders wirksam verhindert werden. Metalldendriten und Abrieb können durch eine homogen belegte Fläche nahezu nicht hindurchwandern. Des Weiteren wird der unmittelbare Kontakt von Elektroden bei Druckbeaufschlagung durch eine solche Fläche vermieden. Vor diesem Hintergrund ist konkret denkbar, dass sämtliche erste Poren des Grundkörpers homogen derart mit den Partikeln ausgefüllt sind, dass die Lage vorwiegend mittlere Porengrößen zeigt, die kleiner sind als die mittleren Durchmesser der Partikel.

Der Grundkörper könnte eine Beschichtung aus den Partikeln aufweisen. Eine Beschichtung bewirkt ebenfalls vorteilhaft die zuvor genannte Unterdrückung von Kurzschlüssen. Wenn eine Lage mit einer Beschichtung versehen ist, tritt zwangsläufig ein Grenzbereich am Grundkörper auf, der zumindest teilweise mit Partikeln gefüllt ist. Die erfindungsgemäße Lage unterscheidet sich jedoch von bekannten Separatoren, beispielsweise aus EP 1138092, signifikant dadurch, dass es sich nicht um ein Verbundmaterial aus einem Vlies und einer weiteren Schicht, die aus Partikeln und Bindern hergestellt wird, handelt. Erfindungsgemäß findet die Vernetzung vollständig oder zumindest teilweise innerhalb des Grundkörpers und gegebenenfalls in Gegenwart der Partikel statt. Sofern Partikel eingesetzt werden, so sind diese in dem Grundkörper eingebettet und von vernetztem Polymer umgeben. Bevorzugt sind die Partikel in dem Grundkörper im Wesentlichen homogen verteilt. Es ist jedoch erfindungsgemäß auch möglich, dass die Partikel ungleichmäßig verteilt sind. So kann die Mehrzahl der Partikel hin zu einer Oberfläche des Grundkörpers angeordnet sein. Bevorzugt sind innerhalb des Grundkörpers mindestens 2, 5, 10 oder 20 Vol.-% der ersten Poren mit Partikeln befüllt.

Die erfindungsgemäße Lage enthält einen Binder. Dabei besteht der Binder bevorzugt aus organischen Polymeren. Die Verwendung eines Binders aus organischen Polymeren erlaubt es, eine Lage mit ausreichender mechanischer Flexibilität herzustellen.

Die Vernetzung des Binders erfolgt, indem vernetzbare Gruppen der Bindermoleküle verknüpft werden. Geeignete vernetzbare Binder sind Polymere oder Copolymere, die durch Polymerisation so hergestellt werden, dass das Polymerisat vernetzbaren Gruppen in der Molekülkette enthält.

Das Polymer kann auch nach der Polymerisation chemisch mit vernetzbaren Gruppen ausgerüstet werden. Erfindungsgemäß können auch Bindergemische eingesetzt werden, die mindestens einen vernetzbaren Binder enthalten.

Erfindungsgemäß ist der Binder bevorzugt das Reaktionsprodukt einer Polymerisation, die in Gegenwart des Grundkörpers und gegebenenfalls der Partikel durchgeführt wird. Der Binder ist beispielsweise ausgewählt aus der Gruppe der Polymerisate aus beta-ungesättigten Carbonsäuren, deren Salzen, deren Estern, Amiden und Nitrilen, und Copolymeren dieser Verbindungen. Besonders bevorzugt sind dabei Acrylate, Methacrylate und deren Derivate sowie die entsprechenden Amide.

In bevorzugten Ausführungsformen der Erfindung ist der Binder ein Polymer, ausgewählt aus Polyester, Polyamid, Polyether, Polycarboxylate, eine Polycarbonsäure, eine Polyvinylverbindung, ein Polyolefin, ein Kautschuk, Polyvinylpyrrolidon, einem halogeniertes Polymer und/oder ein ungesättigtes Polymer oder ein Copolymer davon. Der Binder muss dabei vernetzbar sein. Wenn der Binder daher beispielsweise ein nicht vernetzbares Polyolefin ist, so muss er chemisch modifiziert sein, so dass Vernetzungsstellen enthalten sind.

Die Binder können in Form von Homopolymeren oder als Copolymere eingesetzt werden. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere).

In einer bevorzugten Ausführungsform der Erfindung ist der Binder ein Polyester oder ein Polyamid oder ein Copolymer davon. Die Copolymere können aus verschiedenen Polyamid und/oder Polyester-Monomeren bestehen oder Copolymere aus solchen Monomeren mit anderen Monomeren sein. Solche Binder zeichnen sich durch sehr gute Haftungseigenschaften aus.

Der Binder bewirkt eine Stabilisierung der Lage. Dies wird durch das dreidimensionale Netzwerk bewirkt, dass der Binder in den Poren oder ausbildet. Die gegebenenfalls enthaltenen Partikel werden so an ihren Positionen in der Lage verfestigt. Erfindungsgemäß ist es außerdem möglich, dass die Vernetzung auch zwischen dem Binder und dem Grundkörper oder zwischen dem Binder und den Partikeln erfolgt. Dies ist beispielsweise möglich, wenn oberflächenbehandelte, reaktive Partikel und/oder Grundkörper eingesetzt werden. Der Binder kann auch eine nicht kovalente, physikalische Affinität zu den Partikeln und/oder dem Grundkörper aufweisen.

Der Schmelzpunkt des Binders und/oder der Partikel könnte unter den Schmelzpunkten der Fasern des Grundkörpers liegen. Durch die Auswahl eines solchen Binders/Partikel kann die Lage zum Teil einen so genannten "Shut-Down-Mechanismus" realisieren. Bei einem "Shut-Down-Mechanismus" verschließen die aufschmelzenden Partikel und/oder der Binder die Poren des Grundkörpers, so dass keine dendritartigen Durchwachsungen durch die Poren und somit Kurzschlüsse auftreten können.

Vor diesem Hintergrund ist denkbar, dass Mischungen aus Partikeln mit unterschiedlichen Schmelzpunkten verwendet werden. Hierdurch kann ein schrittweises oder stufenweises Verschließen der Poren mit zunehmender Temperatur bewirkt werden.

Der mikroporöse Grundkörper schmilzt aber wegen der Vernetzung der Monomermischung vorzugsweise nicht vollständig auf. Er bildet gewissermaßen eine thermostabile Matrix und zeigt daher insgesamt eine hohe thermische Stabilität. Der Meltdown eines solchen Separators in einer Batterie findet erst bei hohen Temperaturen statt, so dass der Separator nicht kollabiert. Die Füllpartikel erlauben aber ein partikuläres Aufschmelzen. Dies führt zu einem gewollten, regioselektiven Shut down-Mechanismus und somit einer Erhöhung der Batteriesicherheit. So erhält man eine Kombination von vorteilhaften Eigenschaften, nämlich einer hohen Meltdown-Temperatur und einer anpassbaren Shut Down Temperatur. Dies ist beispielsweise bei Anwendungen im Automobilbereich vorteilhaft.

Die Vernetzung ermöglicht die Verwendung der Lage als temperaturstabilen Separator. Es wurde erfindungsgemäß beobachtet, dass die Vernetzung die Temperaturstabilität verbessert. Unvernetzte Materialien können dagegen unter einer Dauerbelastung bei erhöhter Temperatur relaxieren und schrumpfen. Die erfindungsgemäße Lage zeigt vorzugsweise bei einer Temperatur von 200°C keine wesentliche Schrumpfung So ist die Schrumpfung vorzugsweise nach 30 min oder besser 60 min bei 200°C geringer als 10%, bevorzugt 5% und besonders bevorzugt 1%. (Messmethode: flaches Stück bei gegebener Temp und Dauer in einen Ofen legen (i.d.R. in Luft) und anschließend Schrumpf der Fläche messen).

Die Partikel könnten einen mittleren Durchmesser im Bereich von 0,01 bis 50 µm, insbesondere 0,01 bis 10 µm, besonders bevorzugt 0,05 bis 5 µm aufweisen. Die Auswahl des mittleren Durchmessers aus diesem Bereich hat sich als besonders vorteilhaft erwiesen, um Kurzschlüsse durch Ausbildung von dendritartigen Durchwachsungen oder Abrieb zu vermeiden.

Die Partikel könnten aus organischen Polymeren bestehen. Geeignete Polymere sind beispielsweise Polyacetale, Polycycloolefin-Copolymere, Polyester, Polyimide, Polyetherketone, Polycarbonsäuren, Polycarboxylate, Kautschuke, Polyvinylverbindungen, Polyether, Polynitrile, Polysulfone, Polyterephthalate, Polynaphtalate und halogenierte Polymere, insbesondere fluorierte und chlorierte Polymere.

Die organischen Polymere können Homopolymere oder Copolymere sein. Als Copolymere sind beispielsweise statistische Copolymere, Gradientencopolymere, alternierende Copolymere, Blockcopolymere oder Propfpolymere geeignet. Die Copolymere können aus zwei, drei oder mehr verschiedenen Monomeren bestehen (Terpolymere, Tetrapolymere). Die genannten Materialien können auch in Form von Gemischen zu Partikeln verarbeitet werden. Allgemein sind thermoplastische Polymere und Polymergemische einsetzbar oder vernetzte Polymere und Polymergemische, wie Elastomere oder Duroplaste.

Die Partikel können insbesondere Polypropylen, Polyvinylpyrrolidon, Polyvinylidenfluorid, Polyester, Polytetrafluorethylen (PTFE), Perfluor-Ethylen-Propylen (FEP), Polystyrol, Styrolbutadiencopolymeren, Polyacrylaten, Polymethacrylaten, Polyvinylpyridin, Polyetherketone, Polybutylterephthalat, Polyethylenterephthalat, Polyacrylnitril, Polyethylennaphtalat, Polysulfon, Polyethylen, Polyoxymethylen, Polybenzimidazol oder Nitrilbutadienpolymeren enthalten oder daraus bestehen, oder Copolymere der zuvor genannten Polymere enthalten oder daraus bestehen. Besonders bevorzugt sind Homopolymere, Copolymere oder Blockcopolymere des Vinylidenfluorids (VDF), des Polytetrafluorethylens (PTFE) und des Polyoxymethylens (POM, auch Polyacetal oder Polyformaldehyd genannt).

In einer bevorzugten Ausführungsform der Erfindung bestehen die Partikel aus Polyacetalen, wie Polyoxymethylen (POM), oder die Partikel enthalten Polyacetale. Es können auch Copolymere von Acetalen eingesetzt werden, beispielsweise mit Trioxan als Comonomer. Polyacetale zeichnen sich durch eine ausgezeichnete Form- und Temperaturbeständigkeit aus.

Sie weisen außerdem nur eine geringe Wasseraufnahme auf. Dies ist erfindungsgemäß vorteilhaft, da der gefüllte Grundkörper insgesamt dann nur wenig Wasser aufnimmt.

In einer weiteren Ausführungsform der Erfindung bestehen die Partikel aus Cyclo-Olefin-Copolymeren (COC) oder enthalten diese. Die thermischen Eigenschaften von COC lassen sich durch Veränderung der Einbauverhältnisse von zyklischen und linearen Olefinen in einem weiten Bereich gezielt verändern und damit an die gewünschten Einsatzbereiche anpassen. Im Wesentlichen kann damit die Wärmeformbeständigkeit in einem Bereich von 65 bis 175 °C eingestellt werden. Die COC zeichnen sich durch eine äußerst geringe Wasseraufnahme und sehr gute elektrische Isolationseigenschaften aus.

In einer weiteren Ausführungsform der Erfindung bestehen die Partikel aus Polyestern oder enthalten diese. Bevorzugt sind insbesondere flüssigkristalline Polyester (LCP). Diese werden beispielsweise unter der Handelsbezeichnung "Vectra LCP" von der Firma Ticona angeboten. Flüssigkristalline Polyester zeichnen sich durch eine hohe Dimensionsstabilität, hohe Temperaturbeständigkeit und gute Chemikalienbeständigkeit aus.

In einer weiteren Ausführungsform der Erfindung bestehen die Partikel aus Polyimiden (PI) oder Copolymeren davon, oder enthalten diese. Geeignete Copolymere sind beispielsweise Polyetherimide (PEI) und Polyamidimide (PAI). Der Einsatz von Polyimiden ist vorteilhaft, weil sie eine hohe mechanische Festigkeit und eine hohe Temperaturbeständigkeit aufweisen. Sie zeigen außerdem gute Oberflächeneigenschaften, die sich gezielt von hydrophil bis hydrophob einstellen lassen.

In einer weiteren Ausführungsform der Erfindung bestehen die Partikel aus Polyetherketonen (PEK) oder Copolymeren davon oder enthalten diese. Insbesondere geeignet sind Polyetheretherketone (PEEK). Polyetherketone sind hochtemperaturstabil und sehr chemikalienbeständig.

In einer weiteren Ausführungsform der Erfindung bestehen die Partikel aus Polycarbonsäuren oder Polycarboxylaten oder Copolymeren davon, oder sie enthalten diese. Geeignet sind insbesondere Homopolymere und Copolymere, insbesondere Blockcopolymere. Die Polymere sind insbesondere hergestellt aus Methacrylsäure, Methacrylaten, Methacrylamiden und Methacrylsäureestern, wie z. B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropylmethacrylaten, -methacrylamiden und -methacrylsäure. Auch die entsprechenden Acrylate, Acrylamide und Acrylsäureverbindungen sind einsetzbar. Durch die Verwendung dieser Homo- und Copolymere lassen sich die gewünschten thermischen Eigenschaften, so z.B. der Shut Down des Separators, die Adhäsion zu dem Grundkörper und zu dem Binder sowie die Benetzungseigenschaften der Partikel gezielt einstellen.

In einer weiteren Ausführungsform der Erfindung bestehen die Partikel aus Kautschuk oder enthalten einen Kautschuk. Die Kautschuke sind vorzugsweise vernetzt. Es sind allgemein bekannte Kautschuke einsetzbar, wie Ethylen-Propylen-Dien-Kautschuk (EPDM-Kautschuk). Insbesondere EPDM-Kautschuk weist eine hohe Elastizität und eine gute chemische Beständigkeit insbesondere gegenüber polaren organischen Medien auf und ist über einen breiten Temperaturbereich einsetzbar. Es können beispielsweise auch Kautschuke eingesetzt werden ausgewählt aus Naturkautschuk, Isopren-Kautschuk, Butadien-Kautschuk, Chloropren-Kautschuk, Styrol-Butadien-Kautschuk und Nitril-Butadien-Kautschuk. Die Polymere dieser Kautschuke enthalten vernetzbare ungesättigte Doppelbindungen und werden als R-Kautschuke bezeichnet. Diese Kautschuke sind bevorzugt vernetzt. Sie können beispielsweise als Homopolymere oder Copolymere, insbesondere Blockcopolymere, eingesetzt werden.

Es sind auch fluorierte Kautschuke einsetzbar, wie Perfluorkautschuk (FFKM), Fluor-Kautschuk (FKM) oder Propylen-Tetrafluorethylen-Kautschuk (FPM), sowie Copolymere davon. Besonders bevorzugt ist FFKM. Diese Binder, insbesondere FFKM, zeichnen sich durch einen hohen Temperatureinsatzbereich, sehr gute Medien- und Chemikalienbeständigkeit und sehr geringe Quellung aus. Sie sind daher insbesondere für Anwendungen in aggressiver Umgebung bei hohen Temperaturen geeignet, wie in Brennstoffzellen.

In einer bevorzugten Ausführungsform der Erfindung bestehen die Partikel aus oder enthalten ein fluoriertes oder halogeniertes Polymer. Dieses kann beispielsweise aus Vinylidenfluorid (VDF), Polytetrafluorethylen (PTFE), Hexafluorpropylen (HFP) oder Chlortrifluorethylen (CTFE) hergestellt sein. Dabei können beispielsweise Homopolymere oder Copolymere, insbesondere Blockcopolymere eingesetzt werden. Die Copolymere können aus verschiedenen halogenierten Monomeren bestehen oder Copolymere aus halogenierten Monomeren mit anderen Monomeren sein. Die Polymere und Monomere können vollständig fluoriert oder chloriert oder teilweise fluoriert oder chloriert sein. In einer besonderen Ausführungsform der Erfindung beträgt der Comonomeranteil der halogenierten Monomere, insbesondere von HFP und CTFE, an dem gesamten Polymer zwischen 1 bis 25 Gew. %. Die halogenierten Polymere zeichnen sich durch ein hohe Temperaturbeständigkeit und Chemikalienbeständigkeit sowie durch eine gute Benetzbarkeit aus. Sie sind besonders zur Verwendung mit fluorierten oder teilfluorierten Bindern geeignet. Durch den Einsatz und die Auswahl von Copolymeren können die Temperaturbeständigkeit und die Verarbeitungstemperatur über einen breiten Temperaturbereich variiert werden. Dadurch kann die Verarbeitungstemperatur des Binders an die Schmelztemperatur der Partikel angepasst werden. Außerdem wird die Einstellung einer Shut-Down-Temperatur ermöglicht.

Besonders bevorzugt ist die Verwendung eines Copolymers aus PTFE und Perfluoro-3,6-dioxa-4-methyl-7-octen-sulfonsäure (PFSA). Dieses ist unter der Handelsbezeichnung Nafion von der Firma Dupont erhältlich. Es ist erfindungsgemäß vorteilhaft, weil es eine gute Kationen- und Protonenleitfähigkeit aufweist.

Die Verwendung organischer Polymere für die Partikel erlaubt ein Aufschmelzen der Partikel zur Erzielung eines "Shut-Down-Effektes". Angesichts der Vernetzung kann eine Lage gefertigt werden, die sich problemlos zuschneiden lässt, ohne zu zerbröseln. Ein Zerbröseln der Lage tritt meist dann auf, wenn ein relativ hoher Anteil an anorganischen Partikeln in der Lage vorliegt. Vor diesem Hintergrund ist denkbar, Mischungen unterschiedlicher Partikel oder Core-Shell-Partikel zu verwenden. Hierdurch kann ein schrittweises oder stufenweises Verschließen der Poren mit zunehmender Temperatur bewirkt werden.

Die erfindungsgemäß einsetzbaren Binder und Partikel, insbesondere die organischen Partikel, sind bevorzugt in hohem Maße temperaturbeständig. Vorzugsweise sind die Binder und/oder Partikel bei Temperaturen von 100, 120 150, 175 oder 200 °C, insbesondere für 24h, beständig. Dies ermöglicht den Einsatz in Brennstoffzellen.

Denkbar ist auch, anorganische Partikel oder anorganisch-organische Hybridpartikel einzusetzen oder beizumischen. Diese Partikel schmelzen nicht unterhalb einer Temperatur von 400° C. Des Weiteren können diese Partikel mit basischen Eigenschaften gewählt werden, um die in Batterien vorliegende Protonenaktivität zumindest teilweise zu vermindern und somit aktiv der Alterung der anderen Batteriekomponenten bzw. der Gasentwicklung entgegenzuwirken.

Als anorganische Partikel sind beispielsweise Metalloxide, Metallhydroxide, Nitride, Carbonitride, Carbooxonitride, Borate Silikate, Sulfate, Carbonate und Glaspartikel geeignet. Die Partikel können aus Aluminiumoxiden, Siliciumoxiden, Zeolithen, Titanaten und/oder Perowskiten bestehen oder diese enthalten. Es sind auch Mischungen dieser Partikel oder Gemische mit anderen Materialien einsetzbar. Als Glaspartikel sind insbesondere Nano- und Mikroglaspartikel geeignet. Diese können aus Alkali- und Erdalkalisulfaten, Alkali- und Erdalkalicarbonaten und Lithiumboraten bestehen oder diese enthalten. Die anorganischen Partikel können unbehandelt, aber auch chemisch modifiziert werden, um ein ideales Benetzungsverhalten mit dem vorliegenden Elektrolyten aufzuweisen, um durch basische Eigenschaften die Protonenaktivität zu verringern, um durch komplexbildende Funktionen Verunreinigungen zu fixieren und um durch komplexbildende Funktionen selektiv die Li-Ionen Transportzahl im Elektrolyten zu erhöhen. Diese Wirkungsweisen können auch die organischen Partikel, der Binder und der Vliesstoff entfalten.

In einer Ausführungsform der Erfindung werden anorganische Partikel mit organischen Partikeln gemischt eingesetzt. Die anorganischen Partikel können intrinsisch eine zerklüftete oder poröse Struktur aufweisen und erhöhen somit die Porosität, insbesondere von Partikelgemischen. Sie weisen auch eine hohe Temperaturbeständigkeit, eine hohe chemische Beständigkeit und eine gute Benetzbarkeit auf. So können beispielsweise Gemische aus organischen und anorganischen Partikeln eingesetzt werden, bei denen bis zu 2, 5, 10, 25 oder 99 Gew.-% der Partikel anorganische Partikel sind.

Es können auch anorganische Partikel eingesetzt werden, die kugelförmig sind oder deren äußere Form eine gleichmäßige Anordnung von Flächen aufweist, die einer Kugel nahekommt. Solche Partikel sind beispielsweise durch Kristallisation erhältlich.

Die erfindungsgemäß einsetzbaren Partikel können nach bekannten Methoden hergestellt werden. So sind Verfahren bekannt, bei denen geeignete, insbesondere kugelförmige, organische Partikel bereits als Reaktionsprodukt der Polymerisation erhalten werden. Bevorzugte Verfahren sind die Emulsions- oder Dispersionspolymerisation.

In einer weiteren Ausführungsform werden die Partikel durch Weiterverarbeitung von Polymeren erhalten. Beispielsweise können Polymergranulate gemahlen werden. Gegebenenfalls werden anschließend Trennverfahren eingesetzt, wie das Sieben, um die gewünschte Größenverteilung zu erhalten. Die Partikel können aus Mischungen unterschiedlicher Partikelgrößen bestehen. Dadurch lässt sich die Porosität und die Porengrößenverteilung variieren.

Die Partikel können inert, quellfähig oder in der Monomerlösung löslich sein. Die Partikel können auch chemisch behandelt sein, beispielsweise durch Modifikation der Oberflächen. So können die Oberflächen hydrophilisiert sein. Die Oberflächen können auch so behandelt sein, dass sie reaktive Gruppen zur Vernetzung mit dem Binder aufweisen.

Der Grundkörper kann ein Vliesstoff, Gewebe, Gewirk, Membran, Folie, Filz, Papier oder Schaum sein. Besonders bevorzugt ist die Verwendung eines Vliesstoffes. Ein Vliesstoff (oder Vlies) ist ein textiles Flächengebilde aus einzelnen Fasern. Der Vliesstoff ist bevorzugt verfestigt.

In einer bevorzugten Ausführungsform der Erfindung besteht der Grundkörper, insbesondere der Vliesstoff, aus Fasern, wobei die Poren aus den Fasern gebildet werden.

Die Fasern des Grundkörpers, insbesondere des Vliesstoffs, könnten aus organischen Polymeren, insbesondere aus Polybutylenterephthalat, Polyethylenterephthalat, Polyacrylnitril, Polyvinylidenfluorid, Polyetheretherketonen, Polyethylennaphtalat, Polysulfonen, Polyimid, Polyester, Polypropylen, Polyoxymethylen, Polyamid, Polyvinylpyrrolidon oder Cellulose, wieViskose, gefertigt sein oder diese enthalten. Denkbar ist auch, Bikomponentenfasern einzusetzen. Diese können die zuvor genannten Polymere aufweisen oder enthalten. Geeignet sind beispielsweise Mischfasern aus Cellulose und Polykieselsäure, die unter der Markenbezeichnung Visil angeboten werden. Die Verwendung dieser organischen Polymere erlaubt es, eine Lage herzustellen, die nur einen geringen thermischen Schrumpf zeigt. Des Weiteren sind diese Materialien weitgehend elektrochemisch stabil gegenüber den in Batterien und Kondensatoren eingesetzten Elektrolyten und Gasen.

Die erfindungsgemäße Lage kann, bezogen auf das Trockengewicht, wie folgt zusammengesetzt sein:
20 bis 98 Gew.-%, insbesondere 50 bis 95 Gew.-% Grundkörper,
0 bis 80 Gew.-%, insbesondere 2 bis 50 Gew.-%, Partikel,
0,1 bis 30 Gew.-%, insbesondere 0,5 bis 15 Gew.-%, Binder.

In bevorzugten Ausführungsformen weist die erfindungsgemäße Lage ein Flächengewicht auf, das 110 bis 500%, insbesondere 120 bis 300% oder 140 bis 200% des Flächengewichts des Grundkörpers ist.

Die mittlere Länge der Fasern des Vliesstoffs könnte deren mittleren Durchmesser um mindestens das zweifache, vorzugsweise ein Vielfaches übersteigen. Durch diese konkrete Ausgestaltung kann ein besonders reißfester Vliesstoff gefertigt werden, da die Fasern miteinander verschlungen werden können.

Mindestens 90% der Fasern des Grundkörpers, insbesondere des Vliesstoffs, könnten einen mittleren Durchmesser von höchstens 12 µm aufweisen. Diese konkrete Ausgestaltung erlaubt den Aufbau einer Lage mit relativ geringen Porengrößen der ersten Poren. Eine noch feinere Porosität kann dadurch erzielt werden, dass mindestens 40% der Fasern einen mittleren Durchmesser von höchstens 8 µm aufweisen.

Die Lage könnte durch eine Dicke von höchstens 100 µm gekennzeichnet sein. Eine Lage dieser Dicke lässt sich noch problemlos aufwickeln und erlaubt einen sehr sicheren Batteriebetrieb. Bevorzugt könnte die Dicke höchstens 60 µm oder höchstens 40 µm oder 30 µm betragen. Diese Dicke erlaubt eine verbesserte Aufwickelbarkeit und dennoch einen sicheren Batteriebetrieb. Besonders bevorzugt könnte die Dicke höchstens 25 µm oder höchstens 5 µm betragen. Mit Lagen einer solchen Dicke können sehr kompakt bauende Batterien und Kondensatoren gebaut werden.

Die erfindungsgemäße Struktur der Lage mit einem vernetzten Binder ermöglicht die Herstellung von Lagen mit hoher Porosität, die dennoch sehr stabil sind. Die Lage könnte eine Porosität von mindestens 25 % oder mindestens 30% aufweisen. Eine Lage dieser Porosität unterdrückt aufgrund ihrer Materialdichte besonders effektiv die Ausbildung von Kurzschlüssen. Bevorzugt könnte die Lage eine Porosität von mindestens 15 % oder mindestens 40% aufweisen. In einer bevorzugten Ausführungsform ist die Porosität größer als 55%. Durch eine Lage dieser Porosität kann eine Batterie mit hoher Leistungsdichte erzeugt werden. Die hier beschriebene Lage zeigt bei hoher Porosität dennoch sehr kleine Poren, so dass sich keine dendritartigen Durchwachsungen von einer Seite zur anderen Seite der Lage ausbilden können. Vor diesem Hintergrund ist denkbar, dass die zweiten Poren ein labyrinthartiges Gefüge ausbilden, in dem sich keine dendritartigen Durchwachsungen von einer Seite zur anderen Seite der Lage ausbilden können.

Die Lage könnte mittlere Porengrößen von höchstens 15 µm oder höchstens 3 µm aufweisen. Die Auswahl dieser Porengröße hat sich als besonders vorteilhaft erwiesen, um Kurzschlüsse zu vermeiden. Besonders bevorzugt könnten die mittleren Porengrößen höchstens 1 µm betragen. Eine solche Lage vermeidet besonders vorteilhaft Kurzschlüsse durch Metalldendritenwachstum, durch Abrieb aus Elektrodenpartikeln und durch unmittelbaren Kontakt der Elektroden bei Druckbeaufschlagung.

Die Lage könnte eine Höchstzugkraft in Längsrichtung von mindestens 15 Newton/5cm oder mindestens 5N/5 cm zeigen (Bestimmung gemäß EN 29 073-T3). Eine Lage dieser Festigkeit lässt sich auf die Elektroden einer Batterie aufwickeln, ohne zu zerreißen.

Gegenstand der Erfindung ist auch ein Verfahren zur Herstellung einer erfindungsgemäßen Lage, wobei
a) eine Lösung oder Dispersion bereitgestellt wird, die den Grundkörper, der die ersten Poren aufweist, und vernetzbare Polymere enthält,
b) die Polymere vernetzt werden und
c) der beschichtete Grundkörper gegebenenfalls getrocknet und/oder erwärmt wird.

Die Polymere dienen dabei als Binder. Dabei kann in einer Ausführungsform der Erfindung zunächst eine Lösung oder Dispersion bereitgestellt werden, die die vernetzbaren Polymere enthält. Die Polymere können dabei in der Lösung oder Dispersion durch Polymerisation hergestellt werden oder der Lösung oder Dispersion von außen zugefügt werden. Anschließend wird der Grundkörper mit der Lösung oder Dispersion imprägniert, gefolgt von der Vernetzung.

In einer weiteren Ausführungsform werden die Polymere in Gegenwart des Grundkörpers durch Polymerisation hergestellt. Die Monomere werden so ausgewählt, dass ein vernetztes oder ein vernetzbares Polymer erhalten wird. Bei dieser Ausführungsform erfolgt die Polymerisation und die Vernetzung bevorzugt in einem einzigen Reaktionsansatz. Dabei ist es möglich, dass beide Reaktionen zeitgleich ablaufen oder ineinander übergehen. Dies kann beispielsweise erreicht werden, wenn bifunktionelle und mehrfunktionelle Monomere in dem Ansatz enthalten sind. Diese können pro Molekül zweifach oder mehrfach an der Reaktion teilhaben und dadurch zwei oder mehr Polymerketten verknüpfen. Es ist dabei vorteilhaft, dass Polymerisation und Vernetzung im wesentlichen nach demselben Mechanismus in einer einzigen Reaktion verlaufen.

Es ist auch möglich, die Polymerisation zunächst im Wesentlichen abzuschließen und anschließend gezielt die Vernetzung durchzuführen, beispielsweise durch Zugabe von Katalysatoren, Bestrahlung oder Erhitzung. Bei dieser Ausführungsform sind die funktionellen Gruppen von bifunktionellen und/oder mehrfunktionellen Monomeren bevorzugt so ausgewählt, dass ein Teil der Gruppen nicht während der Polymerisation reagiert.

Die Lösung oder Dispersion in Schritt a) kann zusätzlich die Partikel enthalten.

Gegenstand der Erfindung ist auch ein Verfahren zur Herstellung einer erfindungsgemäßen Lage, wobei
a) eine Lösung oder Dispersion hergestellt wird, die polymerisierbare Monomere enthält, wobei mindestens ein Teil der Monomere vernetzbar ist,
b) der Grundkörper mit den ersten Poren mit der Lösung oder Dispersion imprägniert wird,
c) die Monomere polymerisiert werden,
d) die in Schritt c) erhaltenen Polymere während oder nach der Polymerisation vernetzt werden und
e) der beschichtete Grundkörper gegebenenfalls getrocknet und/oder erwärmt wird.

Die Lösung oder Dispersion in Schritt a) kann zusätzlich die Partikel enthalten.

In einer bevorzugten Ausführungsform der Erfindung umfassen die Monomere ein Gemisch aus monofunktionellen und mehrfach funktionellen Monomeren.

Die Polymerisation in Schritt c) erfolgt bevorzugt ionisch oder radikalisch. Die Polymerisation erfolgt in Gegenwart des Grundkörpers und gegebenenfalls der Partikel. Die Vernetzung in Schritt d) erfolgt bevorzugt thermisch oder durch Strahlung, insbesondere UV-Strahlung.

In einer bevorzugten Ausführungsform der Erfindung sind die Monomeren ein Gemisch aus monofunktionellen und bifunktionellen Monomeren. Der Anteil an Bi- oder mehrfunktionellen Monomeren an dem Gemisch ist bevorzugt 0,1 bis 50 Gew.-%, insbesondere 0,5 bis 30 Gew.-%.

Durch die Kombination von verschiedenen Monomeren und/oder Vernetzern lässt sich das Quellverhalten der Lage optimieren. Das Quellverhalten ist dabei von der Vemetzungsdichte abhängig. Dies ist beispielsweise beim Einsatz der Lagen als Separatoren von Bedeutung.

In weiteren Ausführungsform der Erfindung enthält die Lösung oder Dispersion Monomere zur Herstellung eines vernetzbaren Binders und mindestens eine weitere Komponente, ausgewählt aus Photoinitiatoren, Radikalinitiatoren, ionische Initiatoren, Thermoinitiatoren, Kettenüberträgern, Kettenreglern und protischen sowie aprotischen Lösungsmitteln.

Bevorzugt eingesetzt werden insbesondere Monomere, die radikalische oder ionisch polymerisiert werden können. Diese Reaktionen werden bevorzugt durch Photoinitiatoren unterstützt. Wenn die Monomere photochemisch aktiv sind, benötigt man keine Photoinitiatoren, da die Monomere dann selbstinitüerend sind und die Polymerisation von selbst starten. Bei einer Vernetzung während der Polymerisation werden bifunktionelle oder mehrfunktionelle Monomere eingesetzt.

Zusätzlich zu den Photoinitiatoren können auch noch thermische Initiatoren hinzugefügt werden. Dadurch kann ein kooperativer Effekt erzielt werden, weil die Polymerisation und somit auch das Vernetzen beschleunigt wird. Bevorzugt ist dabei eine Kombination von Strahlenbehandlungen, z.B. von IR und UV Strahlung. Dadurch kann insgesamt die Produktionsgeschwindigkeit erhöht werden.

Als monofunktionelle Verbindungen für die radikalische Polymerisation eignen sich insbesondere Verbindungen, die mindestens zwei konjugierte Doppelbindungen aufweisen. Bei der Polymerisation enthält man ungesättigte Polymere, die vernetzt werden können.

Bei einer radikalischen Polymerisation ist es bevorzugt, dass als monofunktionelle Monomere beta-ungesättigte Carbonsäuren, deren Salze, deren Ester, Amide oder Nitrile eingesetzt werden. Dabei ist an der beta-Position eine Doppelbindung oder Dreifachbindung enthalten. Die Ester und Säuren weisen bevorzugt die allgemeine Formel R¹R²C=C-COOR³ auf. Dabei sind R¹, R² und R³ organische Reste oder H. Die organischen Reste sind insbesondere Alkyl, Aryl und Alkaryl. Die Alkylreste, insbesondere R³, sind insbesondere unverzweigte oder verzweigte C1 bis C20 Reste, bevorzugt Methyl, Ethyl, Propyl, Isopropyl, Ethyl-2-n-propyl, Benzyl-2-n-propyl, Butyl, Isobutyl, Pentyl, Hexyl, Octyl, Ethylhexyl, Decyl, Isodecyl, Stearyl, Lauryl, Cyclohexyl, Isobornyl, 2-Hydroxyethyl, Ethoxy-Ethoxy, Furfuryl, Tetrahydrofurfuryl, oder Arylreste wie Benzyl, Phenyl und Phenoxyethyl. Bevorzugt sind auch die entsprechenden Verbindungen, die an Stelle der Estergruppe eine Amidgruppe aufweisen.

In bevorzugten Ausführungsformen der Erfindung sind die monofunktionellen Monomere Acrylate, Methacrylate, Acrylamide, Methacrylamide oder Derivate davon. Geeignete Monomere sind beispielsweise Ester der Acrylsäure und Methacrylsäure und deren Derivaten, wobei der Esterbestandteil bis zu 20 C-Atomen im Rest auweist, so z.B. Methyl, Ethyl, Propyl, Isopropyl, Ethyl 2-n-propyl, Benzyl 2-n-propyl, Butyl, Isobutyl, Pentyl, Hexyl, Octyl, Ethylhexyl, Decyl, Isodecyl, Stearyl, Lauryl, Cyclohexyl, Isobornyl, Phenyl, Benzyl, Phenoxyethyl, 2-Hydroxyethyl, Ethoxy-Ethoxy, Furfuryl, Tetrahydrofurfuryl ist.

Bevorzugt sind insbesondere fluorierte oder perfluorierte Acrylate und Methacrylate, Ethylenglycol-methylether-acrylat, Ethylenglycoldicyclopentenylether-acrylat, Poly(ethylenglycol)-methylether-acrylate mit einem Molekulargewicht von ca. 200 bis 500, Poly(propylenglycol)-acrylate mit einem Molekulargewicht von ca. 200 bis 500, Di(ethylenglycol) 2-ethylhexyl-ether-acrylat, 2-(2-Oxo-1-imidazolidinyl)-ethyl-methacrylat, 2-(Diethylamino)ethyl-acrylat, 2-(Diethylamino)-ethyl-methacrylat, 4-Acryloylmorpholin. Geeignet sind auch monofunktionelle Urethanacrylate und Methacrylate, Styrol, α-Alkylstyrol, Vinyltoluol, Vinylstearat. Geeignet sind auch Acrylamide, Methacrylamide, N-Methylolacrylamid, N-Methylolmethacrylamid, ungesättigte Nitrile, wie Acrylnitril, Methacrylnitril. Weitere geeignete monounktionelle Monomere sind Vinylether, Vinylacetat, Vinylpropionat, Vinylbutyrat, 1-Vinyl-2-pyrrolidon, 2-Vinylpyridin, N-Vinylcaprolactam, N-Vinylformamid, N-Vinylphthalimid, 3-Vinylanisol, 2-Vinylanisol, Crotonsäure und Ester der Crotonsäure, Acrylamidomethylpropansulfonsäure, Maleinsäure und Ester der Maleinsäure, Fumarsäure und Ester der Fumarsäure sowie Itakonsäure und Ester der Itakonsäure. Es können auch Gemische der bezeichneten monofunktionellen Monomere eingesetzt werden.

Als bifunktionelle oder mehrfunktionelle Monomere für die radikalische Polymerisation eignen sich insbesondere Verbindungen, die an zwei oder mehr Positionen im Molekül polymerisieren und/oder vernetzen können. Dadurch kann während der Polymerisation ein Netzwerk entstehen. Solche Verbindungen weisen bevorzugt zwei identische oder ähnliche reaktive Funktionalitäten auf. Alternativ können Verbindungen eingesetzt werden, die mindestens zwei unterschiedlich reaktive Funktionalitäten aufweisen. So kann eine reaktive Gruppe polymerisieren und die andere reaktive Gruppe, die nicht an der Polymerisation teilhat, gezielt vernetzt werden.

Geeignete bifunktionelle oder mehrfunktionelle Monomere für die radikalische Polymerisation sind beispielsweise Diacrylate, Dimethycrylate, Triacrylate, Trimethacrylate, Tetraacrylate, Tetramethacrylate, Pentaacrylate, Pentamethacrylate, Hexaacrylate und Hexamethacrylate. Inbesonders geeignet sind 1,3-Butandioldiacrylat, 1,6-Hexandioldiacrylat, 1,9 Nonandioldiacylat, Neopentylglycoldiacrylat, 1,6-Hexandiol-ethoxylatdiacrylat, 1,6-Hexanediol-propoxylatdiacrylat, 3-(Acryloyloxy)-2-hydroxypropylmethacrylat, 3-Hydroxy-2,2-dimethylpropyl 3-hydroxy-2,2-dimethylpropionatdiacrylate, 5-Ethyl-5-(hydroxymethyl)-β,β-dimethyl-1,3-dioxan-2-ethanoldiacrylat, Bisphenol-A-ethoxylatediacrylat mit einem Molekulargewicht von ca. 450 bis 700, Bisphenol-A-propoxylatdiacrylat, Di(ethylenglycol)-diacrylat, Pentaerythritoldiacrylatmonostearat, Poly(ethyleneglycol)-diacrylate mit einem Molekulargewicht von ca. 250 bis 1000, Tetra(ethyleneglycol)-diacrylat, Tri(propylene glycol)diacrylat, Tri(propylenglycol)-glycerolat-diacrylat, Trimethylolpropan-benzoatdiacrylat, Vinylcrotonat, Divinylbenzol, 1,6 Bis(3,4-epoxy-4-methylcyclohexancarbonsäure)hexyldiester, Vinylacrylat, Vinylmethacrylat, Di(trimethylolpropan)-tetraacrylat, Dipentaerythritolpenta-/hexa-acrylat, Pentaerythritolpropoxylat-triacrylate, Pentaerythritoltetraacrylat, Trimethylolpropan-ethoxylat-triacrylate mit einem Molekulargewicht von 400 bis 1000, und Tris[2-(acryloyloxy)ethyl]-isocyanurat.

Erfindungsgemäß kann auch eine ionische Polymerisation durchgeführt werden. Diese kann eine anionische oder kationische Polymerisation sein. Als Monomere sind ungesättigte Verbindungen geeignet, insbesondere solche mit einer Kohlenstoff-Kohlenstoff-Doppelbindung.

Als monofunktionellen Monomere für die ionische Polymerisationen sind beispielsweise Glycidyl-phenylether, Limonenoxid, Cyclohexenoxid, Cyclooctenoxid, Butyl-glycidylether, Glycidyl-isobutylether, Glycidylisopropylether, 2-Ethylhexyl-glycidylether, 2-Methyl-2-vinyloxiran, 1,2-Epoxybutan, 1,2-Epoxy-5-hexen, 1,2-Epoxydecan, 1,2-Epoxydodecan, fluorierte und perfluorierte Oxirane mit bis zu 20 Kohlenstoffatomen, geeignet.

Bei der ionischen Polymerisation kommen insbesondere folgende bifunktionelle und mehrfunktionelle Monomere und Vernetzer zum Einsatz: Bisphenol-A-diglycidylether, 1,2,5,6-Diepoxycyclooctan, 1,2,7,8-Diepoxyoctan, 1,3-Butadiendiepoxid, 4-Butandioldiglycidylether, 1,4-Cyclohexandimethanol-diglycidylether, 3,4-Epoxycyclohexylmethyl 3,4-epoxycyclohexancarboxylat, 4,4'-Methylenbis(N,N-diglycidylanilin), Bis(3,4-epoxycyclohexylmethyl)adipat, Ethylenglycol-diglycidylether, Neopentylglycol-diglycidylether, Poly[(o-cresylglycidylether)-co-formaldehyd] mit einem Mn von ca. 350 bis 1100 g/mol, Polyethylenglycoldiglycidylether mit einem M_{w} von ca. 330 bis 600 g/mol, Poly(propylenglycol)-diglycidylether mit einem M_{w} von ca. 350 bis 700 g/Mol, 5-Amino-1,3,3-trimethylcyclohexanmethylamin, Poly(propylenglycol)bis(2-aminopropylether), Triethylentetramin, 4,4'-Methylendianilin, 1,2-Cyclohexandicarboxylicanhydrid.

Der Lösung oder Dispersion können Polymerisationsinitiatoren zugefügt werden. Bei der ionischen Polymerisation und bei der radikalischen Polymerisation werden bevorzugt Photoinitiatoren eingesetzt. In einer weiteren Ausführungsform sind keine Photoinitiatoren enthalten. Einige bekannte Monomere starten eine Polymerisation ohne Photoinitiatoren allein durch die Absorption von Strahlung. Wenn dies nicht der Fall ist, werden Photoinitiatoren zugesetzt. Diese Initiatoren können die radikalische und/oder die ionische Polymerisation initiieren. Die Initiation erfolgt dabei durch Strahlung. Der Anteil der Polymerisationsinitiatoren an der Lösung oder Dispersion kann zwischen 0,05 bis 10 Gew.-% oder 0,05 und 5 Gew.-%, insbesondere 0,1 bis 3 Gew.-%, liegen. Mit der Menge an Initiator kann die Polymerisation beeinflusst werden. Allgemein gilt, dass die Polymerketten kürzer werden, wenn mehr Initiator eingesetzt wird. Dadurch werden die die Quelleigenschaften und die thermischen Eigenschaften der erhaltenen Lage beeinflusst.

Bei der radikalischen Polymerisation können Reaktionsinitiatoren eingesetzt werden. Diese sind üblicherweise Verbindungen, die unter bestimmten Bedingungen wie Bestrahlung oder erhöhter Temperatur Radikale freisetzen. Geeignete Initiatoren für die radikalische Polymerisation sind beispielsweise 1-Hydroxycyclohexyl phenylketon, 2,2-Diethoxyacetophenon, 2-Benzyl-2-(dimethylamino)-4'-morpholinobutyrophenon, Hydroxy-2-methylpropiophenon, 2-Hydroxy-4'-(2-hydroxyethoxy)-2-methylpropiophenon, 2-Methyl-4'-(methylthio)-2-morpholinopropiophenon, 3,6-Bis(2-methyl-2-morpholinopropionyl)-9-octylcarbazol, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2,2-Dimethoxy-2-phenylacetophenon, 4-(Dimethylamino)benzoin, ,4'-Dimethylbenzil, Benzoin ethyl ether, Benzoin methyl ether, (4-Benzoylbenzyl)trimethylammonium chlorid, [2-(Acryloyloxy)ethyl](4-benzoylbenzyl)dimethylammonium bromid, ,5-Dimethylbenzophenon, 2-Methylbenzophenone, Benzophenon-3,3',4,4'-tetracarboxylic dianhydrid, 3,4-Dimethylbenzophenon, 3-Hydroxybenzophenon, 3-Methylbenzophenon, 4-(Diethylamino)benzophenon, 4-(Dimethylamino)benzophenon, 4-(p-Tolylthio)benzophenon, 4,4'-Bis[2-(1-propenyl)phenoxy]benzophenon, 4,4'-Bis(diethylamino)benzophenon, Michler's keton, 4,4'-Dihydroxybenzophenon, 5,5'-Methylenebis(2-hydroxy-4-methoxybenzophenon und Benzophenon.

Es können auch thermische Radikalinitiatoren eingesetzt werden. Diese zerfallen bei erhöhter Temperatur in Radikale, die die Polymerisation initiieren. Geeignete thermische Radikalinitiatoren sind beispielsweise 4,4'-Azobis(4-cyanovaleriansäure), 1,1'-Azobis(cyclohexancarbonitril), ,2'-Azobis(2-methylpropionitril), Benzoylperoxid, 2,5-Bis(*tert*-butylperoxy)-2,5-dimethylhexan, Bis[1-(*tert*-butylperoxy)-1-methylethyl]benzene, *tert-*Butylperoxid, *tert*-Butylperoxybenzoat, Cumenhydroperoxid, Dicumylperoxid und Lauroylperoxid.

Bei der ionischen Polymerisation können Initiatoren eingesetzt werden. Es handelt sich dabei üblicherweise um Verbindungen wie Lewis-Basen oder Bronsted-Säuren, die in einer ersten Reaktion Ionen erzeugen. Geeignete Initiatoren für die ionische Initiatoren sind beispielsweise (4-Bromophenyl)diphenylsulfoniumtriflat, (4-Chlorophenyl)diphenylsulfonium triflat, (4-Fluorophenyl)diphenylsulfonium triflat, (4-lodophenyl)diphenylsulfonium triflat, (4-Methoxyphenyl)diphenylsulfonium triflat, (4-Methylphenyl)diphenylsulfonium triflat, (4-Methylthiophenyl)methyl phenyl sulfonium triflat, (4-Phenoxyphenyl)diphenylsulfonium triflat, (4-Phenylthiophenyl)diphenylsulfonium triflat, (4-*tert-*Butylphenyl)diphenylsulfonium triflat, (*tert-*Butoxycarbonylmethoxynaphthyl)-diphenylsulfonium triflat, Bocmethoxyphenyldiphenylsulfonium triflat, 2-(4-Methoxystyryl)-4,6-bis(trichloromethyl)-1,3,5-triazin, 2-Naphthyl diphenylsulfonium triflat, [4-[(2-Hydroxytetradecyl)oxy]phenyl]phenyliodonium hexafluoroantimonat, Bis(4-*tert*-butylphenyl)iodonium perfluoro-1-butanesulfonate, Bis(4-*tert-*butylphenyl)iodonium *p*-toluenesulfonat, Bis(4-*tert*-butylphenyl)iodonium triflat, Bis(4-*tert*-butylphenyl)iodonium triflat, Diphenyliodonium *p-*toluenesulfonat, Diphenyliodonium triflat, Diphenyliodonium-9,10-dimethoxyanthracen-2-sulfonat, *N*-Hydroxy-5-norbornen-2,3-dicarboximid perfluoro-1-butanesulfonat, *N*-Hydroxynaphthalimid triflat, *N-*Hydroxyphthalimid triflat, Thiobis(triphenyl sulfonium hexafluorophosphat), Triarylsulfonium hexafluoroantimonat Salze, Triarylsulfonium hexafluorophosphat Salze, Triphenylsulfonium perfluoro-1-butanesufonat, Triphenylsulfonium triflat, Tris(4-*tert*-butylphenyl)sulfonium perfluoro-1-butanesulfonat, Tris(4-*tert*-butylphenyl)sulfonium triflat, 2-*tert-*Butylanthraquinon und 2-*tert*-Butylanthraquinon.

Es können weitere bekannte Zusatzstoffe eingesetzt werden, die Polymerisationsreaktionen unterstützen. Geeignet sind beispielsweise Kettenüberträger und Regler. Als Kettenüberträger und Regler eignen sich beispielsweise Carbontetrachlorid, Chloroform, 1-Butanethiol, 2,2'-(Ethylenedioxy)diethanethiol, 4,4'-Thiobisbenzenethiol, Butyl 3-mercaptopropionat, Ethyl 3-mercaptopropionat, Methyl 3-mercaptopropionat, Pentaerythritol tetrakis(2-mercaptoacetat) Pentaerythritol tetrakis(3-mercaptopropionat), *tert*-Nonyl mercaptan und Raft-Reagenzien.

In einer bevorzugten Ausführungsform der Erfindung wird der Grundkörper mit folgender Lösung oder Dispersion imprägniert:
a) 1 bis 100% Gew.-%, insbesondere 2 bis 80 Gew.-%, polymerisierbare Monomere,
b) 0 bis 80% Gew.-%, insbesondere 2 bis 70 Gew.-%, Partikel,
c) 0 bis 10 Gew.-%, insbesondere 0,05 bis 5 Gew.-%, Polymerisationsinitiatoren,
d) 0 bis 5%, insbesondere 0,05 bis 3 Gew.-%, Kettenüberträger,
e) 0 bis 95 Gew.-%, insbesondere 0 bis 90 Gew.-% oder 0 bis 75 Gew.-% Lösungsmittel.

Geeignete Lösungen oder Dispersionen zur Polymerisation enthalten beispielsweise Methacrylat, Dimethacrylat und PVP; oder Vinylpyrrolidon, PVP und PVP-Partikel; oder PVDF-Partikel, PVP, Monomethacrylat und Dimethacrylat; oder Acrylsäure und Tensid gegebenenfalls in Verbindung mit Aluminiumoxid- oder PTFE-Partikeln.

Die polymerisierbaren Monomere enthalten bevorzugt bis zu 50, insbesondere 0,1 bis 30 oder 0,2 bis 20 Gew.-% bifunktionelle oder mehrfunktionelle Monomere. Die übrigen Monomere sind monofunktionell Monomere. Der Zusatz eines Lösungsmittels ist optional. Falls die Monomere flüssig sind, können die Partikel auch in dem Monomer gelöst werden.

In einer bevorzugten Ausführungsform erfolgen das Polymerisieren und das Vernetzen des imprägnierten Grundkörpers photochemisch unter anschließendem Trocknen der Lage.

Es kann erfindungsgemäß eine temperaturstabile, mikroporöse, einschichtige Lage erhalten werden. Die erfindungsgemäße Lage kann mit anderen Komponenten zu Mehrschichtsystemen kombiniert werden. Erfindungsgemäß können auch mehrere erfindungsgemäße Lagen kombiniert werden.

In einer besonderen Ausführungsform der Erfindung wird die Lage nachbehandelt, um eine zumindest partielle Entmischung des polymeren Binders und der Partikel zu erreichen. Dadurch kann eine mikroporöse Struktur erhalten werden. Diese Entmischung wird erreicht, wenn als Binder und als Partikel verschiedene Polymere eingesetzt werden, die nur begrenzt kompatibel sind.

In einer bevorzugten Ausführungsform der Erfindung wird zunächst eine Lösung oder Dispersion hergestellt. Diese enthält die Monomere und gegebenenfalls die Partikel und weitere Additive.

Die Additive können so ausgewählt werden, dass sie die Rheologie und damit die Verarbeitung und/oder die Stabilität der Dispersion beeinflussen und die Polymerisation sowie die Batterieeigenschaften nicht beeinträchtigen. Es können übliche Dispersionsadditive wie Säuren, Basen, Tenside, beispielsweise ionische oder nichtionische Tenside, Verdickungsmittel, wie Alginsäure, Agar, Carrageen, Johannisbrotkernmehl, Guarkernmehl Traganth, Gummi arabicum, Xanthan, Karaya, Tarakernmehl, Gellan, Pektin, Cellulose, Zelluloseether, Carboxymethylcellulose, Hydroxypropylcellulose, Hydroxypropylmethylcellulose, Methylcellulose, Methylethylcellulose, modifizierte Stärke, Polyethylenglykol und Carbopol, Polymere, wie Polyacrylate, Oligoether, Polyether und Polyelektrolyte, eingesetzt werden. Als Verdickungsmittel können auch Silikate, insbesondere Bentonite, Hectorite, Montmorillonite, Wollastonite und hydratisierte oxidische Partikel, wie SiO₂-Partikel, Al₂O₃-Partikel oder TiO₂- Partikel, verwendet werden. Die eingesetzten Partikel können bereits nach ihrer Herstellung als Dispersion vorliegen oder werden vom Hersteller in Form einer Dispersion zur Verfügung gestellt. Gegebenenfalls müssen sie zunächst dispergiert werden. Dabei können gängige Dispergierungshilfsmittel, wie Tenside und Emulgatoren, eingesetzt werden.

Zu der Herstellung der Dispersion werden die Komponenten zusammengegeben und unter Rühren und gegebenenfalls unter Erwärmen homogenisiert. Die Dispersion kann eine wässrige Dispersion sein. Es kann jedoch auch eine Dispersion in einem Lösungsmittel eingesetzt werden, oder in einem Wasser/Lösungsmittel-Gemisch. Der Feststoffgehalt der Dispersion liegt vorzugsweise zwischen 5 bis 70, bevorzugt 20 bis 65, und besonders bevorzugt 25 und 45 Gew.-%.

Die Dispersion kann nach bekannten Beschichtungsverfahren auf den Grundkörper; insbesondere den Vliesstoff, aufgebracht werden. In besonderen Ausführungsformen wird ein Grundkörper bevorzugt kontinuierlich oder auch semi-kontinuierlich, mit gängigen Beschichtungsverfahren beschichtet. Geeignete Verfahren sind beispielsweise Rakeln, Sprühen, Vorhangsbeschichtung (Curtain Coating), Roller Systemen wie z.B. 2,3 & 5 Roller Systemen, 3 Roller Combi Systemen, Micro Roller Systemen, Reverse Roll Systemen, Engraved Roller Systemen, Dipping Systemen, Slot Die Systemen, Knife Systemen, Double Side Systemen, Commabar Systemen, Schaumauftrag, oder bevorzugt Imprägnieren. Die Beschichtungsgeschwindigkeit kann dabei 0,5 bis 1000 oder 0,5 bis 200 m/min betragen, bevorzugt 20 bis 200 oder 20 bis 1000 m/min, und besonders bevorzugt zwischen 50 und 200 oder 50 bis 100 m/min. Anschließend wird der beschichtete Grundkörper bevorzugt getrocknet und gegebenenfalls verfestigt. Die Beschichtung kann bei 50 bis 500 °C oder 50 bis 200°C, bevorzugt 100 bis 200°C und besonders bevorzugt zwischen 120 und 200°C getrocknet werden. Das Erwärmen und/oder das Trocknen kann sowohl im Kontakt (Kalandrieren, Trommettrockner, Bandtrockner) als auch kontaktfrei (Warmluft, Heißluft, IR-Strahlung, Mikrowellen) oder durch andere Erwärmungsmethoden nach dem Stand der Technik erfolgen.

Durch eine Kalandrierung könnte die Lage mechanisch verfestigt werden. Die Kalandrierung bewirkt eine Reduzierung der Oberflächenrauhigkeit. Die an der Oberfläche des Grundkörpers gegebenenfalls eingesetzten Partikel zeigen nach der Kalandrierung Abplattungen.

Das erfindungsgemäße Verfahren unter Verwendung von Monomeren, die in Gegenwart der Lage polymerisiert werden, weist verschiedene Vorteile auf. Ein Vorteil ist, dass das Verfahren sehr schnell durchführbar ist. Der Grundkörper kann in einem Produktionsschritt beschichtet und photochemisch vernetzt werden. Der große Vorteil der photochemischen Vernetzung liegt in ihrer Geschwindigkeit und Gleichmäßigkeit. Das Verfahren ist daher viel schneller als bekannte Verfahren, bei denen Vliesstoffe beschichtet und anschließend thermisch behandelt, kalandriert oder in ähnliche Verfahren weiter verarbeitet werden.

Zudem ist das Verfahren sehr variabel und kann daher den spezifischen Anforderungen gut angepasst werden, beispielsweise den spezifischen Anforderungen in einer Batterie im Bezug auf Elektroden, Elektrolyte und Batteriedesign. Durch die Auswahl der Monomere und gegebenenfalls der Partikel kann das Benetzungsverhalten, beispielsweise eines Separators, durch den jeweiligen Elektrolyten optimiert werden. Durch die Wahl der Monomere, der Vemetzungsdichte und der Partikel kann das Quellverhalten eines Separators in Gegenwart von Elektrolyten optimiert werden.

Durch die Auswahl der Materialien kann auch die Haftung der Lage, beispielsweise als Separator auf den Elektroden, verbessert werden. Dies ist wichtig für die Laminierung von Separatoren und Elektroden, die bei der Herstellung von Li-Polymer Batterien ein wichtiger Schritt ist.

Die hier beschriebene Lage kann insbesondere in Batterien und Kondensatoren als Separator eingesetzt werden, da sie Kurzschlüsse besonders wirksam verhindert.

Sie kann auch in Brennstoffzellen als Gasdiffusionsschicht oder Membran Verwendung finden, da sie gute Benetzungseigenschaften zeigt und Flüssigkeiten transportieren kann. Gegenstand der Erfindung ist daher auch eine Brennstoffzelle, eine Batterie, ein Batterieelektrolytsystem oder ein Kondensator, der mindestens eine erfindungsgemäße Lage enthält.

Die erfindungsgemäße Lage eignet sich besonderes zur Kombination mit typischen Batterieelektrolytsystemen. Diese setzen sich aus einem oder mehreren Flüssigkeiten und einem oder mehreren Leitsalzen zusammen. Geeignete Lösungsmittel für Elektrolytsysteme sind beispielsweise solche auf der Basis von Carbonaten, wie Ethylencarbonat, Diethylcarbonat, Dimethylcarbonat und Propylencarbonat, oder Lactonen, wie Butyrolacton. Oft werden Gemische dieser Lösungsmittel benutzt.

Die konventionellen Lösungsmittel wie die oben aufgeführten Carbonate haben den Nachteil, dass sie leicht entflammbar sind. Daher wurden andere Elektrolytsysteme auf der Basis von ionischen Flüssigkeiten entwickelt. Ionische Flüssigkeiten weisen den Vorteil auf, dass sie wesentlich schwerer zu entflammen sind als Carbonate. Es werden Mischungen von ionischen Flüssigkeiten benutzt, aber auch Mischungen von ionischen Flüssigkeiten (IL) mit den konventionellen Lösungsmitteln, die oben genannt sind. Ionische Flüssigkeiten bestehen beispielsweise aus flüssigen Salzen, die ein Kation basierend auf Ammonium, Pyridinium, Pyrrolium, Oxazolium, Oxazolinium, Imidazolium oder Phosphoniumionen aufweisen.

Häufig eingesetzte Leitsalze sind insbesondere Lithiumsalze, wie LiPF₆, LiClO₄, LiAsF₆, LiBF₄, LiCF₃SO₃, LiN(CF₃SO₂)₂, LiN(CF₂CF₃SO₂)₂, LiSbF₆, LiAlCl₄, LiGaCl₄, LiCl, LiNO₃, LiSCN, LiO₃SCF₂CF₃, LiC₆F₅SO₃, LiO₂CCF₃, LiFSO₃, LiB(C₆H₅)₄, LiB(C₂O₄)₂, Li(NTf₂). Die Konzentration des Leitsalzes beträgt 0,2 mol/kg (bezogen auf Elektroyltlösungsmittel) bis zur Löslichkeitsgrenze, bevorzugt 0,2 bis 0,8 mol/kg und besonders bevorzugt 0, 4 bis 0,6 mol/kg.

Abschließend sei ganz besonders hervorgehoben, dass die in der Anmeldung enthaltenen konkreten Ausführungsformen lediglich zur Erörterung der erfindungsgemäßen Lehre dient, diese jedoch nicht einschränken.

### Ausführungsbeispiele

### Messmethoden:

Für die Bestimmung des Flächengewichtes wurden jeweils 3 100x100mm große Proben ausgestanzt, die Proben gewogen und der Messwert mit 100 multipliziert.

Die Dicken wurden mit einem Präzisions-Dickenmessgerät Modell 2000 U/ Elektrik gemessen. Die Messfläche betrug 2cm², der Messdruck 1000 cN/cm².

### Beispiel 1

Zu 320 Teilen einer 50 % Methoxypolyethylenglykol 750-methacrylat Lösung (PLEX®6850-O, Fa. Evonik) wurde unter ständigem Rühren 130 Teile einer Polyvinylpyrrolidon (PVP; Luvitec K90, Fa. BASF) Lösung gegeben. Daraufhin wurden 4 Teile Polyethylenglykol 200-dimethacrylat, 2,7 Teile Irgacure 754 (Fa. Ciba) und 1,3 Teile Irgacure 819 DW (Fa. Ciba), ebenfalls unter Rühren und Lichtausschluss, hinzugefügt.

### Beschichtung

Ein 30x49, 5 cm großer PET-Vliesstoff (Fa. Freudenberg, Dicke: 20µm, Flächengewicht: 11,6 g/m²) wurde mittels eines
Walzenbeschichtungsverfahren beschichtet, durch einen UV-Tischtrockner (Fa. Technigraf, Modell Aktiprint T) gefahren und bei 120°C getrocknet.
Es wurde ein beschichteter Vliesstoff mit einem Flächengewicht von 15 g/m² und einer Dicke von 23 µm erhalten.

### Beispiel 2

Zu 65 Teilen einer 5 % PVP (Polyvinylpyrrolidon) Lösung (Luvitec K90, Fa. BASF) wurden unter ständigem Rühren 100 Teile einer 25% PVP-Partikeldispersion (Luvicross, Fa. BASF), 75 Teile Vinylpyrrolidon und 140 Teile entionisiertes Wasser gegeben. Daraufhin wurden 2,7 Teile Irgacure 754 (Fa. Ciba) und 1,3 Teile Irgacure 819 DW (Fa. Ciba), ebenfalls unter Rühren und Lichtausschluss, hinzugefügt.

### Beschichtung

Ein 30x49, 5 cm großer PET-Vliesstoff (Fa. Freudenberg; Dicke: 20µm, Flächengewicht: 11,6 g/m²) wurde mittels eines Walzenbeschichtungsverfahren beschichtet, mehrmals durch einen UV-Tischtrockner (Fa. Technigraf, Modell Aktiprint T) gefahren und bei 120°C getrocknet. Es wurde ein beschichteter Vliesstoff mit einem Flächengewicht von 16 g/m² und einer Dicke von 23 µm erhalten.

### Beispiel 3

Zu 200 Teilen einer 57 % PVDF Dispersion (KYNAR 301 F, Fa. Arkema, mittlere Partikelgröße 0,25 µm) wurden unter ständigem Rühren mit einem Flügelrührer 200 Teile einer 2% PVP (Polyvinylpyrrolidon) Lösung (Luvitec K90, Fa. BASF), 15 Teile Polyethylenglykol 200-dimethacrylat (Fa. Evonik) und 60 Teile einer 50 % Methoxypolyethylenglykol 750-methacrylat (Fa. Evonik) Lösung gegeben. Daraufhin wurden 2,7 Teile Irgacure 754 (Fa. Ciba) und 1,3 Teile Irgacure 819 DW (Fa. Ciba), ebenfalls unter Rühren und Lichtausschluss, hinzugefügt.

### Beschichtung

Ein 15 cm breiter PET-Vliesstoff (Fa. Freudenberg, Dicke: 20µm, Flächengewicht: 11,3 g/m²) wurde mittels eines Walzenbeschichtungsverfahren kontinuierlich beschichtet, mehrmals durch einen UV-Tischtrockner (Fa. Technigraf, Modell Aktiprint T) gefahren und bei 120°C getrocknet. Es wurde ein beschichteter Vliesstoff mit einem Flächengewicht von 22 g/m² und einer Dicke von 30 µm erhalten.

### Beispiel 4

Zu 50,89 Teilen einer 80 % Acrylsäurelösung (Ceda Chemicals) wurden unter ständigem Rühren mit einem Flügelrührer und Lichtausschluss 12,50 Teile Tensid (Alkylpolyethylenglycoletherethoxylat; Lutensol ON 118;Fa. BTC), 1,75 Teile 2,2-Dimethoxy-2-phenylacetophenone (Fa. Aldrich), 6,52 Teile Triallyl-1,3,5-Triazine-2,4,6 (1H,3H,5H)-Trione (Fa. Aldrich) und 28, 34 Teile entionisiertes Wasser gegeben.

### Beschichtung

Ein 15 cm breiter PET-Vliesstoff (Fa. Freudenberg, Dicke: 20µm. Flächengewicht: 11,3 g/m²) wurde mittels eines Walzenbeschichtungsverfahren kontinuierlich beschichtet, durch einen UV-Tischtrockner (Fa. Technigraf, Modell Aktiprint T) gefahren und bei 60°C getrocknet. Es wurde ein beschichteter Vliesstoff mit einem Flächengewicht von 17 g/m² und einer Dicke von 25 µm erhalten.

### Beispiel 5

Zu 50,89 Teilen einer 80 % Acrylsäurelösung (Ceda Chemicals) wurden unter ständigem Rühren mit einem Flügelrührer und Lichtausschluss 12,50 Teile Lutensol ON 118 (Fa. BTC), 14 Teile einer 60% Aluminiumoxiddispersion (Al2O3) (mittlere Partikelgröße 0,7 µm), 1,75 Teile 2,2-Dimethoxy-2-phenylacetophenon (Fa. Aldrich), 6,52 Teile Triallyl-1,3,5-Triazin-2,4,6 (1H,3H,5H)-Trion (Fa. Aldrich) und 28, 34 Teile entionisiertes Wasser gegeben.

### Beschichtung

Ein 15 cm breiter PET-Vliesstoff (Fa. Freudenberg, Dicke: 20µm, Flächengewicht: 11,3 g/m²) wurde mittels eines Walzenbeschichtungsverfahren kontinuierlich beschichtet, durch einen UV-Tischtrockner (Fa. Technigraf, Modell Aktiprint T) gefahren und bei 120°C getrocknet. Es wurde ein beschichteter Vliesstoff mit einem Flächengewicht von 22 g/m² und einer Dicke von 29 µm erhalten.

### Beispiel 6

Zu 50,89 Teilen einer 80 % Acrylsäurelösung (Ceda Chemicals) wurden unter ständigem Rühren mit einem Flügelrührer und Lichtausschluss 12,50 Teile Lutensol ON 118 (Fa. BTC ), 10 Teile einer 60% PTFE Dispersion (Dyneon TF 5032R, Fa. 3M, mittlere Partikelgröße 160nm), 1,75 Teile 2,2-Dimethoxy-2-phenylacetophenon (Fa. Aldrich), 6,52 Teile Triallyl-1,3,5-Triazin-2,4,6 (1H,3H,5H)-Trion (Fa. Aldrich) und 28, 34 Teile entionisiertes Wasser gegeben.

### Beschichtung

Ein 15 cm breiter PET-Vliesstoff (Fa. Freudenberg, Dicke: 20µm, Flächengewicht: 11,3 g/m²) wurde mittels eines Walzenbeschichtungsverfahren kontinuierlich beschichtet, durch einen UV-Tischtrockner (Fa. Technigraf, Modell Aktiprint T) gefahren und bei 120°C getrocknet. Es wurde ein beschichteter Vliesstoff mit einem Flächengewicht von 23 g/m² und einer Dicke von 28 µm erhalten.

In der Tabelle 1 werden die erhaltenen Werte für die Dicke und das Gewicht der gemäß den Beispielen 1 bis 6 erhaltenen Muster zusammengefasst.

**Tabelle 1:**

| *Muster* | *Verfahren* | *Dicke [*µm*]* | *Gewicht [g*/*m²]* |
|---|---|---|---|
| *Beispiel 1* | Walzenbeschichtung & UV-Vernetzung | 23 | 15 |
| *Beispiel 2* | Walzenbeschichtung & UV-Vernetzung | 23 | 16 |
| *Beispiel 3* | Walzenbeschichtung & UV-Vernetzung | 30 | 22 |
| *Beispiel 4* | Walzenbeschichtung & Um-Vernetzung | 25 | 17 |
| *Beispiel 5* | Walzenbeschichtung & UV-Vernetzung | 29 | 22 |
| *Beispiel 6* | Walzenbeschichtung & UV-Vernetzung | 28 | 23 |

## Patentansprüche

1. Lage mit einem Grundkörper aus Fasern, wobei die Fasern aus Polybutylterephthalat, Polyethylenterephthalat, Polyacrynitril, Polyvinylidenfluorid, Polyetheretherketonen, Polyethylennaphtalat Polysulfonen, Polyimid. Polyester. Polypropylen. Polyoxymethylen, Polyamid, Polyvinylpyrrolidon, Cellulose oder Viskose, gefertigt sein oder diese enthalten, wobei der Grundkörper ein Vliesstoff mit einer Dicke von höchstens 100 µm ist und Poren aufweist, wobei die Lage zumindest einen Binder aus organischen Polymeren aufweist, wobei der Binder vernetzt ist und wobei der Binder ein organisches Polymer enthält, das ausgewählt ist aus der Gruppe der Polymerisate aus beta-ungesättigen Carbonsäuren, deren Salzen, deren Estern. Amiden und Nitrilen, sowie von Acrylate, Methacrylaten und deren Derivaten, und Copolymeren dieser Verbindungen und wobei
Grundkörper zumindest teilweise mit Partikeln befüllt ist, wobei die Partikel erste Poren zumindest teilweise ausfüllen und mit Partikeln befüllte Bereiche ausbilden, wobei die Partikel in den befüllten Bereichen zweite Poren ausbilden und wobei die Partikel aus organischen Polymeren gefertigt sind, die aus der Gruppe Polypropylen, Polyvinylpyrrolidon, Polyvinylidenfluorid, Polyester, fluorierte Polymere, chlorierte Polymere, Polytetrafluorethylen, Perfluor-Ethylen-Propylen (FEP), Polystyrol, Styrolbutadiencopolymer, Polyacrylat Nitributadienpolymere, Polymethacryle, Polyetheramide, Polyetherimide, Polyetherketone. EPDM-Kautschuk, fluorierter Kautschuk, Polyvinylpyridin-Polyetherketone, Polybutylterephthalat, Polyethylenterephthalat, Polyacrylnitril, Polyethylennaphtalat Polysulfon, Polyethylen, Polyoxymethylen, Polybenzimidazol sowie Copolymere und Gemische der zuvor genannten Polymere ausgewählt sind oder wobei die Partikel anorganische Partikel und ausgewählt sind aus Metalloxiden, Metallhydroxiden. Nitriden. Carbonitriden, Carbooxonitriden, Boraten, Sulfaten. Carbonaten, Glaspartikeln Silikaten und/oder als Partikelmischung der vorgenannten anorganischen und organischen Partikel vorliegen und dass der mittlere Durchmesser der Partikel größer als die mittlere Porengröße der Mehrzahl der zweiten Poren ist.

2. Lage nach Anspruch 1, **dadurch gekennzeichnet, dass**
die Partikel kugelförming ausgebildet sind, und/oder
dass die Partikel im Grundkörper flächig homogen verteilt sind, und/oder
dass zumindest ein Teil der befüllten Bereiche als Beschichtung des Grundkörpers mit den Partikeln ausgebildet ist.

3. Lage nach einem der Ansprüche 1 oder 2, **dadurch gekennzeichnet, dass** der -Schmelzpunkt des Binders unter den Schmelzpunkten der Partikel und/ oder des Grundkörpers liegt, und/oder
dass die Partikel einen mittleren Durchmesser im Bereich von 0,01 und 10 µm aufweisen.

4. Lage nach einem der Ansprüche 1 bis 3, **dadurch gekennzeichnet, dass** die Partikel ausgewählt sind aus der Gruppe bestehend aus Aluminiumoxiden, Siliciumoxiden, Zeolithen, Titanaten und/oder Perowskiten.

5. Lage nach einem der Anspruch 1 bis 4, **dadurch gekennzeichnet, dass** die mittlere Länge von Fasern des Vliesstoffs deren mittleren Durchmesser um mindestens das zweifache, vorzugsweise ein Vielfaches, übersteigt, und/oder
**dadurch gekennzeichnet, dass** mindestens 90% der Fasern des Vliesstoffs einen mittleren Durchmesser von höchstens 12 um aufweisen.

6. Lage nach einem der Ansprüche 1 bis 5, gekennzeichnet durch eine Dicke von höchstens 60 µm und besonders bevorzugt von 20 µm, und/oder
gekennzeichnet durch eine Porosität von mindestens 15 %, bevorzugt von mindestens 35 %, und/oder
gekennzeichnet durch eine Höchstzugkraft der Lage von mindestens 15 N/5cm in Längsrichtung, und/oder
**dadurch gekennzeichnet, dass** der Grundkörper kalandriert ist

7. Lage nach einem der Ansprüche 1 bis 6, **dadurch gekennzeichnet, dass** die ersten und die zweiten Poren ein labyrinthartiges Gefüge ausbilden, und/oder gekennzeichnet durch eine Porengröße der zweiten Poren von höchstens 3 µm, bevorzugt von höchstens 1 µm.

8. Verfahren zur Herstellung einer Lage nach einem der Ansprüche 1 bis 7, wobei
a) eine Lösung oder Dispersion bereitgestellt wird, die den Grundkörper, der die ersten Poren aufweist, und vernetzbare Polymere und optional zusätzlich Partikel enthält.
b) die Polymere vernetzt werden und
c) der beschichtete Grundkörper gegebenenfalls getrocknet und/oder erwärmt wird.

9. Verfahren zur Herstellung einer Lage nach einem der Ansprüche 1 bis 7, wobei
a) eine Lösung oder Dispersion hergestellt wird, die polymerisierbare Monomere enthält, wobei mindestens ein Teil der Monomere vernetzbar ist,
b) der Grundkörper mit den ersten Poren mit der Lösung oder Dispersion imprägniert wird,
c) die Monomere polymerisiert werden,
d) die in Schritt c) erhaltenen Polymere während oder nach der Polymerisation vernetzt werden und
e) der beschichtete Grundkörper gegebenenfalls getrocknet und/oder erwärmt wird.
wobei die Monomeren optional ein Gemisch aus monofunktionellen und bifunktionellen und/oder mehrfunktionellen Monomeren sind und/oder
wobei optional die Polymerisation in Schritt c) ionisch oder radikalisch erfolgt und/oder wobei optional
die Vernetzung in Schritt d) thermisch oder durch Strahlung, insbesondere UV-Strahlung, erfolgt, und/oder
wobei optional die Lösung oder Dispersion in Schritt a) mindestens eine weitere Komponente enthält, ausgewählt aus Photoinitiatoren, Radikalinitiatoren, ionische Initiatoren, Thermoinitiatoren, Kettenüberträgern, Kettenreglern und protischen sowie aprotischen Lösungsmitteln, und/oder
wobei optional die Lösung oder Dispersion in Schritt a) zusätzlich Partikel enthält

10. Verwendung einer Lage nach einem der Ansprüche 1 bis 7 als Separator in Brennstoffzellen, Batterien oder Kondensatoren, als Gasdiffusionsschicht oder als Membran.

11. Brennstoffzelle, Batterie oder Kondensator, enthaltend mindestens eine Lage gemäß einem der Ansprüche 1 bis 7.

## Claims

1. Ply having a main body consisting of fibres, the fibres being manufactured from or containing polybutyl terephthalate, polyethylene terephthalate, polyacrylonitrile, polyvinylidene fluoride, polyether ether ketones, polyethylene naphthalate, polysulphones, polyimide, Polyester, polypropylene, polyoxymethylene, polyamide, polyvinylpyrrolidone, cellulose, or viscose, the main body being a fibrous nonwoven web fabric with a thickness of not more than 100 µm and having pores, the ply including at least one binder consisting of organic polymers, the binder being crosslinked and the binder containing an organic polymer selected from the group consisting of the polymers of beta-unsaturated carboxylic acids, their salts, their esters, amides and nitriles and also of acrylates, methacrylates and their derivatives, and copolymers of these compounds, and the main body being at least partially filled with particles, which particles at least partially fill first pores and form regions filled with particles, wherein the particles in the filled regions form second pores and wherein the particles are fabricated from organic polymers selected from the group consisting of polypropylene, polyvinylpyrrolidone, polyvinylidene fluoride, polyester, fluorinated polymers, chlorinated polymers, polytetrafluoroethylene, perfluoroethylene-propylene (FEP), polystyrene, styrenebutadiene copolymers, polyacrylate, nitrile-butadiene polymers, polymethacrylates, polyether amides, polyether imides, polyether ketones, EPDM rubber, fluorinated rubber, polyvinylpyridine, polyether ketones, polybutyl terephthalate, polyethylene terephthalate, polyacrylonitrile, polyethylene naphthalate, polysulphone, polyethylene, polyoxymethylene, polybenzimidazole and copolymers and mixtures of the aforementioned polymers or wherein the particles are inorganic particles and are selected from metal oxides, metal hydroxides, nitrides, carbonitrides, carbooxonitrides, borates, sulphates, carbonates, glass particles, silicates and/or are present as a particles mixture of the abovementioned inorganic and organic particles, and the average diameter of the particles is greater than the average pore size of the majority of the seconds pores.

2. Ply according to Claim 1, **characterized in that** the particles are spherical in configuration, and/or **in that** the particles form a sheetlike homogeneous distribution in the main body, and/or **in that** at least a portion of the filled regions are configured as a coating of the main body with the particles.

3. Ply according to either of Claims 1 and 2, **characterized in that** the melting point of the binder is below the melting points of the particles and/or the main body, and/or **in that** the particles have an average diameter in the range from 0.01 to 10 µm.

4. Ply according to any ane of Claims 1 to 3, **characterized in that** the particles are selected from the group consisting of aluminium oxides, silicon oxides, zeolites, titanates and/or perowskites.

5. Ply according to any one of Claims 1 to 4, **characterized in that** the average length of the fibres of the fibrous nonwoven web fabric exceeds their average diameter by at least twofold, preferably by a multiple, and/or **characterized in that** at least 90% of the fibres of the fibrous nonwoven web fabric have an average diameter of not more than 12 µm.

6. Ply according to any one of Claims 1 to 5, **characterized by** a thinness of not more than 60 µm and more preferably of 20 µm, and/or **characterized by** a porosity of at least 15%, preferably of at least 35%, and/or **characterized by** an ultimate tensile strength force of the ply of at least 15 N/5 cm in the longitudinal direction, and/or **characterized in that** the main body is calendered.

7. Ply according to any one of Claims 1 to 6, **characterized in that** the first and second pores form a labyrinthine microstructure, and/or **characterized by** a pore size of not more than 3 µm and preferably of not more than 1 µm for the second pores.

8. Process for producing a ply according to any sone of Claims 1 to 7, which comprises
a) providing a solution or dispersion containing the main body having the first pores and crosslinkable polymers and optionally additionally particles,
b) crosslinking the polymers, and
c) the coated main body being optionally dried and/or heated.

9. Process for producing a ply according to any one of Claims 1 to 7, which comprises
a) producing a solution or dispersion containing polymerizable monomers, at least some of the monomers being crosslinlable,
b) impregnating the main body having the first pores with the solution or dispersion,
c) polymerizing the monomers,
d) crosslinking the polymers obtained in step c) during or after the polymerization, and
e) the coated main body being optionally dried and/or heated,
wherein the monomers are optionally a mixture of monofunctional and bifunctional and/or polyfunctional monomers, and/or wherein the polymerisation in step c) is optionally effected topically or free-radically, and/or wherein the crosslinking in step d) is optionally effected thermally or via radiation, in particular UV radiation, and/or wherein the solution or dispersion in step a) optionally contains at least one further component selected from photoinitiators, free-radical initiators, ionic initiators, thermal initiators, chain transfer agents, chain regulators and protic and also aprotic solvents and/or wherein the solution or dispersion in step a) optionally additionally contains particles.

10. Use of a ply according to many one of Claims 1 to 7 as a separator in fuel cells, batteries or capacitors, as a gas diffusion layer or as a membrane.

11. Fuel cell, battery or capacitor containing at least one ply according to any one of Claims 1 to 7.

## Revendications

1. Couche comprenant un corps de base en fibres, les fibres étant en polytéréphtalate de butyle, polytéréphtalate d'éthylène, polyacrylonitrile, polyfluorure de vinylidène, polyétheréthercétones, polynaphtalate d'éthylène, palysulfonas, polyimide, polyester, polypropylène, polyoxyméthylène, polyamide, polyvinylpyrrolidone, cellulose ou viscose, ou contenant ceux-ci, le corps de base étant un non-tissé d'une épaisseur d'au plus 100 µm et comprenant des pores, la couche comprenant au moins un liant en polymères organiques, le liant étant réticulé et le liant contenant un polymère organique qui est choisi dans le groupe constitué par les polymères d'acides carboxyliques bêta-insaturés, leurs sels, leurs esters, amides et nitrile, ainsi que les acrylates, méthacrylates et leurs dérivés, et les copolymères de ces composés, et le corps de base étant au moins partiellement rempli avec des particules, les particules remplissant au moins partiellement des premiers pores et formant des zones remplies avec des particules, les particules formant des seconds pores dans les zones remplies et les particules étant en polymères organiques qui sont choisis dans le groupe constitué par le polypropylène, la polyvinylpyrrolidone, le polyfluorure de vinylidène, le polyester, les polymères fluorés, les polymères chlorés, le polytétrafluoroéthylène, le perfluoroéthylène-propylène (EP), le polystyrène, les copolymères de styrène-butadiène, le polyacrylate, les polymères de nitrile-butadiène, les polyméthacrylates, les polyéther-amides, les polyéther-imides, les polyéther-cétones, le caoutchouc EPDM, le caoutchouc fluoré, la polyvinylpyridine, les polyéther-cétones, le polytéréphtalate de butyle, le polytéréphtalate d'éthylène, le polyacrylonitrile, le polynaphtalate d'éthylène, la polysulfone, le polyéthylène, le polyoxyméthylène, le polybenzimidazole, ainsi que les copolymères et mélanges des polymères susmentionnés, ou les particules étant des particules inorganiques choisies parmi les oxydes de métaux, les hydroxydes de métaux, les nitrures, les carbonitrures, les carbooxonitrures, les borates, les sulfates, les carbonates, les particules de verre, les silicates et/ou se présentant sous la forme de mélanges particulaires des particules inorganiques et organiques susmentionnées, et le diamètre moyen des particules étant supérieur à la taille de pore moyenne de la pluralité des seconds pores.

2. Couche selon la revendication 1, **caractérisée en ce que** les particules sont configurées sous forme sphérique et/ou
**en ce que** les particules sont distribuées de manière homogène à plat dans le corps de base, et/ou **en ce qu'**au moins une partie des zones remplies est configurée sous la forme d'un revêtement du corps de base avec les particules.

3. Couche selon l'une quelconque des revendications 1 ou 2, **caractérisée en ce que** le point de fusion du liant se situe sous les points de fusion des particules et/ou du corps de base, et/ou
**en ce que** les particules présentent un diamètre moyen dans la plage allant de 0,01 à 10 µm.

4. Couche selon l'une quelconque des revendications 1 à 3, **caractérisée en ce que** les particules sont choisies dans le groupe constitué par les oxydes d'aluminium, les oxydes de silicium, les zéolithes, les titanates et/ou les pérovskites.

5. Couche selon l'une quelconque des revendications 1 à 4, **caractérisée en ce que** la langueur moyenne des fibres du non-tissé dépasse leur diamètre moyen d'au moins deux fois, de préférence de quatre fois, et/ou **caractérisée en ce qu'**au moins 90 % des fibres du non-tissé présentent un diamètre moyen d'au plus 12 µm.

6. Couche selon l'une quelconque des revendications 1 à 5, **caractérisée par** une épaisseur d'au plus 60 µm et de marnière particulièrement préférée de 20 µm, et/ou **caractérisée par** une porosité d'au moins 15 %, de préférence d'au moins 35 %, et/ou
**caractérisée par** une force de traction maximale de la couche d'au moins 15 N/5 cm dans la direction longitudinale, et/ou
**caractérisée en ce que** le corps de base est calandré.

7. Couche selon l'une quelconque des revendications 1 à 6, **caractérisée en ce que** les premiers et les seconds pores forment une structure en labyrinthe, et/ou **caractérisée par** une taille de pore des seconds pores d'au plus 3 µm, de préférence d'au plus 1 µm.

8. Procédé de fabrication d'une couche selon l'une quelconque des revendications 1 à 7, selon lequel
a) une solution ou dispersion est préparée, qui contient le corps de base comprenant les premiers pores et des polymères réticulables et éventuellement en outre des particules,
b) les polymères sont réticulés et
c) le corps de base revêtu est éventuellement séché et/ou chauffé.

9. Procédé de fabrication d'une couche selon l'une quelconque des revendications 1 à 7, selon lequel
a) une solution ou dispersion est préparée, qui contient des monomères polymérisables, au moins une partie des monomères étant réticulables,
b) le corps de base est imprégné dans les premiers pores avec la solution ou dispersion,
c) les monomères sont polymérisés,
d) les polymères obtenus à l'étape c) sont réticulés pendant ou après la polymérisation, et
e) le corps de base revêtu est éventuellement séché et/ou chauffé,
les monomètres étant éventuellement un mélange de monomères monofonctionnels et bifonctionnels et/ou polyfonctionnels, et/ou
la polymérisation à l'étape c) ayant éventuellement lieu par voie ionique ou radicalaire, et/ou la réticulation à l'étape d) ayant éventuellement lieu thermiquement ou par rayonnement, notamment rayonnement UV, et/ou
la solution ou dispersion à l'étape a) contenant éventuellement au moins une composant supplémentaire, choisi parmi les photoinitiateurs, les initiateurs radicalaires, les initiateurs ioniques, les initiateurs thermiques, les agents de transfert de chaîne, les régulateurs de chaînes et les solvants protiques et aprotiques, et/ou
la solution ou dispersion à l'étape a) contenant éventuellement en outre des particules.

10. Utilisation d'une couche selon l'une quelconque des revendications 1 à 7 en tant que séparateur dans des piles à combustible, des batteries ou des condensateurs, en tant que couche de diffusion de gaz ou en tant que membrane.

11. Pile à combustible, batterie ou condensateur, contenant au moins une couche selon l'une quelconque des revendications 1 à 7.
